# EUROPÄISCHE PATENTSCHRIFT

(11) **EP 2 663 417 B1**
(45) Veröffentlichungstag und Bekanntmachung des Hinweises auf die Patenterteilung: **31.10.2018**
(21) Anmeldenummer: 12716178.4
(22) Anmeldetag: 10.01.2012
(51) Int. Cl.: B23K 9/12, B23K 9/127

(54) **VERFAHREN ZUM EINLERNEN/PRÜFEN EINES BEWEGUNGSABLAUFS EINES SCHWEISSROBOTERS, SCHWEISSROBOTER UND STEUERUNG DAZU**
METHOD OF TEACHING / CHECKING A SEQUENCE OF MOVEMENT OF A WELDING ROBOT, WELDING ROBOT AND ASSOCIATED CONTROLLER
PROCÉDÉ D'APPRENTISSAGE/DE TEST DE LA SÉQUENCE DE MOUVEMENTS D'UN ROBOT DE SOUDAGE, ROBOT DE SOUDAGE ET COMMANDE ASSOCIÉE

(30) Priorität: 10.01.2011 AT 272011
(43) Veröffentlichungstag der Anmeldung: 20.11.2013
(73) Patentinhaber: FRONIUS INTERNATIONAL GmbH, 4643 Pettenbach (AT)
(72) Erfinder: ARTELSMAIR, Josef, A-4552 Wartberg/Krems (AT)
(74) Vertreter: Burger, Hannes
(86) Internationale Anmeldenummer: PCT/AT2012/050004
(87) Internationale Veröffentlichungsnummer: WO 2012/094689

(56) Entgegenhaltungen:
- EP-A2- 1 123 769
- JP-A- 61 092 785
- JP-A- 2009 262 275
- "ROBOT HAS TACTILE SEAM SEARCHUNIT", MACHINERY AND PRODUCTION ENGINEERING,, Bd. 142, Nr. 3656, 19. September 1984 (1984-09-19), Seiten 36-37, XP001340709,

## Beschreibung

Die Erfindung betrifft ein Verfahren zum Teachen eines Schweißroboters, bei dem über einen manuell durchgeführten Positioniervorgang eine Position festgelegt und gespeichert wird, umfassend die Schritte Herausfahren eines beweglich gelagerten Schweißdrahtes, aus einem Schweißkopf, insbesondere eines Schweißbrenners, auf eine Länge und Bewegen des Schweißkopfes zu einer Position an einem Werkstück, bevorzugt bei deaktivierter Stromversorgung des Schweißkopfes. Die Erfindung betrifft auch ein Verfahren zum automatischen Positionieren eines Schweißkopfes an einem Werkstuck, bei dem eine vorprogrammierte Position angefahren wird (siehe die Druckschrift EP-A-1123769). Weiterhin betrifft die Erfindung eine Steuerung für das Teachen eines Schweißroboters, bei dem über einen manuell durchgeführten Positioniervorgang eine Position festgelegt und gespeichert wird, umfassend einen ersten Ausgang zur Ansteuerung eines ersten Antriebssystems, welches zum Bewegen des Schweißkopfes zu einer Position an einem Werkstück, bevorzugt bei deaktivierter Stromversorgung des Schweißkopfes, vorbereitet ist, und einen zweiten Ausgang zur Ansteuerung eines zweiten Antriebssystems, welches zum Herausfahren eines beweglich gelagerten Schweißdrahts aus einem Schweißkopf, insbesondere des Schweißbrenners, auf eine Länge vorbereitet ist.
Schließlich betrifft die Erfindung eine Schweißanlage, umfassend ein Schweißgerät und einen Schweißroboter, die über Leitungen, insbesondere ein Bussystem, miteinander gekoppelt sind, und einen am Schweißroboter, insbesondere an der letzten Achse des Schweißroboters, befestigten Schweißbrenner, wobei der Schweißbrenner vom Schweißroboter entlang einer vorgegeben Bahn geführt wird und die Steuerung-/Regelung des dabei durchgeführten Schweißprozesses vom Schweißgerät aus erfolgt.
Seit langem werden Industrieroboter für die unterschiedlichsten Aufgaben, unter anderem auch für das Schweißen, eingesetzt. Dabei wird ein Schweißkopf über eine vordefinierte Bahn gefahren, um die Schweißung auszuführen. Nach dem Stand der Technik existieren einige Methoden, um Industrieroboter, hier im Speziellen Schweißroboter, zu programmieren:
Eine Möglichkeit ist, den Roboter online zu programmieren. Die Programmierung des Roboters erfolgt also direkt am oder mit dem Roboter selbst. Zu diesen Programmierverfahren zählen das Teach-In-Verfahren und das Playback-Verfahren.

Beim Teach-In-Verfahren fährt der Programmierer den Roboter mit einer Steuerkonsole in eine Position, die auch im späteren, automatisch auszuführenden Bewegungsablauf enthalten ist, und speichert diese ab. Diese Abfolge wird so lange wiederholt bis der gesamte auszuführende Bewegungsablauf abgespeichert ist. Bei der Ausführung des Programms fährt dann der Roboter alle gespeicherten Punkte autonom an. Für die Bewegung zwischen den einzelnen Punkten können zusätzliche Parameter wie Geschwindigkeiten und Beschleunigungen des Schweißkopfes eingegeben werden.

Beim Playback-Verfahren fährt der Programmierer durch direktes Führen des Roboterarms die vorgesehene Bahn ab. Während des Führens des Schweißkopfes werden Koordinaten durch den Roboter aufgezeichnet und später in ein Roboterprogramm konvertiert Der Roboter wiederholt später genau diesen vom Programmierer ausgeführten Bewegungsablauf.

Eine weitere Möglichkeit zur Programmierung von Schweißrobotern stellt die Offline-Programmierung dar. Die Programmentwicklung erfolgt dabei offline an einem vom Roboter unabhängigen Computer. Der Roboter selbst wird dazu nicht benötigt.

Zur Offline-Programmierung zählt die Textuelle Programmierung, die CAD gestützte Programmierung, die Makroprogrammierung und die Akustische Programmierung. Bei der Textuellen Programmierung wird der Bewegungsablauf mit einer problemorientierten Sprache beschrieben. Das Verfahren ist vergleichbar mit dem Programmieren in einer höheren Programmiersprache. Bei häufig wiederkehrenden Arbeitsvorgängen werden Makros erstellt, die häufig benutzte Befehlsfolgen in verkürzter Form darstellen. Das Makro wird einmal programmiert und anschließend an den erforderlichen Stellen des Steuerprogramms eingefügt.

Bei der CAD gestützten Programmierung wird der Roboter auf Basis von Konstruktionszeichnungen und Simulationen programmiert. Der gesamte Bewegungsablauf wird dabei am PC in einer dreidimensionalen Bildschirmumgebung festgelegt, wobei in der Regel die Umgebung des Roboters und sein Werkzeug ebenfalls abgebildet sind. Häufig werden Konstruktionszeichnungen auch direkt durch ein spezielles Konversionsprogramm in einen Bewegungsablauf umgesetzt, welcher bei Bedarf auch noch manuell verändert beziehungsweise korrigiert werden kann.

Bei der Akustischen Programmierung erfolgt die Programmierung des Schweißroboters schließlich über die natürliche Sprache mit Hilfe eines Mikrofons. Das System wandelt die gesprochen Befehle um und generiert daraus einen auszuführenden Bewegungsablauf.

Allen Programmierverfahren ist gemein, dass früher oder später ein Bewegungsablauf an der realen Maschine ausgeführt wird. Beim Teach-In-Verfahren und dem Playback-Verfahren ist dieser Bewegungsablauf vorerst nicht gespeichert. Am realen Roboter wird daher ein später auszuführender Bewegungsablauf eintrainiert. Ist der auszuführende Bewegungsablauf einmal abgespeichert, sei es durch Online- oder Offlineprogrammierung, so kann dieser überprüft werden. Dies ist insbesondere für die Offlineprogrammierung wichtig, da in der virtuellen Welt später real existierende Probleme leicht übersehen werden können oder dort erst gar nicht dargestellt sind.

In der Regel wird beim Einlernen und/oder Überprüfen eines Bewegungsablaufs eines Schweißroboters noch keine Schweißung durchgeführt. Stattdessen kann der Schweißkopf mit einem Schweißdraht bestückt werden, ohne dass die für das Schweißen nötige Spannung angelegt, beziehungsweise der für das Schweißen nötige Strom bereitgestellt wird. Auf diese Weise kann der Bewegungsablauf relativ gefahrlos eintrainiert beziehungsweise überprüft werden. Der Schweißkopf nimmt dabei dieselbe Lage zum Werkstück ein wie später auch beim Schweißen.

Aufgrund von Ungeschicklichkeiten bei der Online-Programmierung oder Fehlern im programmierten Bewegungsablauf kann es beim Einlernen und/oder Überprüfen desselben leicht dazu kommen, dass der Schweißdraht oder im schlimmsten Fall der Schweißkopf selbst mit dem Werkstück kollidiert und beschädigt wird.

In ersterem Fall kann das Problem in der Regel noch relativ leicht und kostengünstig behoben werden, indem der Schweißdraht ausgetauscht oder gekürzt wird (z.B. kann ein verbogener Schweißdraht gekürzt und anschließend um die gekürzte Länge aus dem Schweißkopf ausgefahren werden). Obwohl der materielle Schaden bei einem beschädigten Schweißdraht vernachlässigbar ist, so entsteht doch ein unter Umständen erheblicher Zeitverlust, etwa weil der Schweißkopf in der momentanen Lage schwer zugänglich ist und/oder in eine Neutralposition gefahren wird. Häufig ist bei letzerem ein Zurücksetzen des Bewegungsablaufs nötig, sodass bereits geprüfte Positionen unnötigerweise nochmals abgefahren werden. Wurde der Schweißkopf beschädigt, so ist die Behebung des Schadens in der Regel sogar noch zeit- und kostenintensiver.
Aus dem Stand der Technik sind zu dieser Problematik einige Veröffentlichungen bekannt. Beispielsweise offenbart die WO 2001/034336 A1 ein Verfahren zum Positionieren eines Schweißbrenners bzw. eines Schweissdrahtes im Mittel einer Naht. Der Schweißbrenner wird durch einen Roboterarm auf eine vorgegebene bzw. programmierte Stellung zwischen zwei Nahtflanken positioniert, worauf ein Abgleichverfahren durchgeführt wird, bei dem der Schweißbrenner durch den Roboterarm in eine Richtung bewegt wird, bis ein Kurzschluss zwischen dem Schweißbrenner oder dem Schweissdraht und einer Nahtflanke des Werkstückes auftritt, worauf der Schweißbrenner in entgegengesetzter Richtung bis zum Auftreten eines weiteren Kurzschlusses zwischen dem Schweißbrenner oder dem Schweissdraht und einer weiteren Nahtflanke des Werkstückes bewegt wird. Anschließend wird von einer Steuervorrichtung durch Auswertung des Verschiebeweges eine Nahtmitte berechnet, auf die der Schweißbrenner positioniert wird.
Weiterer Stand der Technik ist beispielsweise in der DE 2 847 169 A1, der DE 690 27 236 T2, der JP 6238449 A, JP-A-61092785 und der JP 58070970 A offenbart.
Die Aufgabe der Erfindung ist es nun, ein verbessertes Verfahren zum Einlernen/Prüfen eines Bewegungsablaufs eines Schweißroboters anzugeben. Insbesondere sollen dabei die oben angeführten Probleme vermieden werden.
Die Aufgabe der Erfindung wird mit einem Verfahren der erst genannten Art gelöst, bei dem:
- nach dem Positionieren an der Position ein sogenannter Wire-Touch-Sensing-Prozess im Schweißgerät gestartet wird, bei dem
- zwischen dem Schweißdraht und dem Werkstück eine Prüfspannung angelegt wird und
- anschließend der manuelle Positioniervorgang mit dem Schweißkopf fortgeführt wird,
- wobei bei Detektion eines Stromflusses zwischen dem Schweißdraht und dem Werkstück beziehungsweise einem Einbruch der Prüfspannung der Schweißdraht zum Unterbrechen des Stromflusses zurückgefahren wird.

Die Aufgabe der Erfindung wird weiterhin mit einem Verfahren der zweit genannten Art gelöst, wobei:
- nach dem Positionieren ein sogenannter Wire-Touch-Sensing-Prozess im Schweißgerät gestartet wird, bei dem
- zwischen dem Schweißdraht und dem Werkstück eine Prüfspannung angelegt wird und der Schweißdraht in Richtung des Werkstückes gefördert wird und bei Detektion eines Stromflusses zwischen Schweißdraht und Werkstück der Schweißdraht zum Unterbrechen des Stromflusses zurückgefahren wird, und wobei
- anschließend eine vorprogramierte Bahn abgefahren wird, die vorzugsweise quer zur geplanten Schweißnahtachse verläuft, und wobei
- beim Verstellen des Schweißkopfes der Schweißdraht wiederholend zum Werkstück und vom Werkstück zurück bewegt wird, also die Kontur des Werkstücks abgetastet wird, und aus den Werten der geförderten Drahtlängen eine definierte Position, insbesondere eine Mittelposition, ermittelt wird.

Die Aufgabe der Erfindung wird auch mit einer Steuerung der eingangs genannten Art gelöst, wobei
- die Steuerung eine Detektionseinrichtung zum Detektieren eines Stromflusses in einem Stromkreis und Mittel zum Starten eines sogenannten Wire-Touch-Sensing-Prozess nach dem Positionieren an der Position umfasst, wobei der Wire-Touch-Sensing-Prozess dazu eingerichtet ist, zwischen dem Schweißdraht und dem Werkstück eine Prüfspannung anzulegen, und anschließend den manuellen Positioniervorgang mit dem Schweißkopf fortzuführen und
- die Steuerung dazu eingerichtet ist, bei Detektion eines Stromflusses zwischen dem Schweißdraht und dem Werkstück beziehungsweise eines Einbruchs der Prüfspannung einen Befehl über den zweiten Ausgang auszugeben, welcher das Zurückfahren des Schweißdrahts zum Unterbrechen des Stromflusses bewirkt.

Die Aufgabe der Erfindung wird schließlich mit einer Schweißanlage der eingangs genannten Art und der oben erwähnten Steuerung gelöst, wobei vor dem Durchführen eines Schweißprozesses ein manuell gesteuerter Teaching-Vorgang, bei dem über einen manuell betätigten Bewegungsablauf eine Position festgelegt und gespeichert wird, durchgeführt wird, der folgende Schritte umfasst:
- Herausfahren eines beweglich gelagerten Schweißdrahts aus einem Schweißkopf auf eine vorgebbare Länge und
- Bewegen des Schweißkopfes zu einer Position an einem Werkstück bei deaktivierter Stromversorgung des Schweißkopfes,
- Starten eines Teaching-Prozesses im Schweißgerät nach dem Positionieren an der Position, bei dem
- zwischen dem Schweißdraht und dem Werkstück eine Prüfspannung angelegt wird und
- anschließend der manuelle Bewegungsablauf mit dem Schweißkopf durchgeführt wird,
- wobei bei Detektion eines Stromflusses zwischen Schweißdraht und Werkstück beziehungsweise bei Einbruch der Prüfspannung der Schweißdraht zum Lösen des Stromflusses zurückgefahren wird und
- nach dem Lösen der Schweißdraht zum Werkstück oder auf die vorgebbare Länge bewegt wird, und wobei
- der Schweißdraht solange die Länge nicht erreicht ist wiederholend zum Werkstück und vom Werkstück zurück entlang der Kontur des Werkstücks bewegt wird.

Erfindungsgemäß wird dadurch erreicht, dass Kollisionen zwischen Schweißdraht beziehungsweise Schweißkopf und Werkstück vermieden oder deren Folgen abgemildert werden. Dazu wird zwischen dem Schweißdraht und dem Werkstück eine Prüfspannung angelegt. Berührt der Schweißdraht das Werkstück, so fliest in dem Stromkreis, in welchem der Schweißdraht und das Werkstück liegen, ein Strom bzw. sinkt die angelegte Prüfspannung ab. Diese Zustandsänderung von Strom und Spannung kann mit aus dem Stand der Technik bekannten Detektionsmitteln wie beispielsweise einem Stromkomperator oder Spannungskomperator detektiert werden. Tritt so ein Fall ein, so wird der Schweißdraht in den Schweißkopf zurückgefahren. Zusätzlich oder alternativ kann auch der Schweißkopf angehalten oder sogar zurückgefahren werden (z.B. in die der ursprünglichen Bewegungsrichtung entgegengesetzte Richtung).

Auf diese Weise kann eine Beschädigung des Schweißdrahts und des Schweißkopfs effektiv verhindert werden. Durch die geringe Massenträgheit des Schweißdrahts, kann dieser nämlich so schnell zurückbewegt werden, dass es zu keiner Beschädigung desselben kommt.

Der Schweißkopf kann wegen seiner deutlich größeren Massenträgheit in der Regel nicht so schnell angehalten beziehungsweise zurückgefahren werden. Jedenfalls bedingt ein schnelles Anhalten oder Zurückfahren des Schweißkopfes erheblichem Energieaufwand und mechanische Belastung. Vorteilhaft ist es daher, den Schweißdraht rasch zurückzufahren und den Schweißkopf innerhalb des so gewonnen Freiraums zügig aber nicht ruckartig anzuhalten, gerade so schnell, dass es zu keiner Kollision mit dem Werkstück kommt. In einer vorteilhaften Variante ist der Robotersteuerung bekannt, wie weit der Schweißdraht über den Schweißkopf (insbesondere das Kontaktrohr) hinaussteht, sodass der verfügbare Bremsweg ebenfalls prinzipiell bekannt ist.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Schweißdraht nach dem Unterbrechen wieder zum Werkstück oder auf die vorgebbare Länge bewegt wird. Auf diese Weise kann nach einer Kollision des Schweißdrahts mit dem Werkstück das Einlernen/Überprüfen des Bewegungsablaufs mit der ursprünglichen Einstellung des Schweißdrahts fortgesetzt werden.

Besonders vorteilhaft ist es, wenn die Rückfördergeschwindigkeit des Schweißdrahtes derart gewählt wird, dass diese stets höher als die Geschwindigkeit der Vorwärtsbewegung des manuell gesteuerten Schweißbrenners ist. Auf diese Weise kann eine Verbiegung des Schweißdrahts vermieden werden, da dieser ja bei dieser Variante der Erfindung schneller vom Werkstück zurückgezogen wird als der Schweißbrenner "hinterher" fährt. Der Schweißdraht wird folglich sofort vom Werkstück abgehoben.

Günstig ist es auch wenn der Schweißdraht stets auf eine vorgebbare Länge herausgefahren wird. Auf diese Weise wird immer wieder ein Initialzustand im Hinblick auf den ausgefahrenen Schweißdraht hergestellt. Der Operator oder Programmierer eines Schweißroboters braucht sich also nicht auf eine neue Situation einstellen, wenn der Schweißdraht einmal zurückgefahren wurde. Das Einlernen/Überprüfen eines Bewegungsablaufs wird somit wesentlich vereinfacht.

Vorteilhaft ist es in diesem Zusammenhang, wenn der Abstand des Schweißkopfs (insbesondere des Kontaktrohrs) vom Werkstück beim Schweißen dem Abstand entspricht, wenn der um die vorgebbare Länge herausgefahrene Schweißdraht das Werkstück berührt. Bei dieser Variante der Erfindung nimmt der Schweißkopf später beim Schweißen dieselbe Lage relativ zum Werkstück ein wie beim Einlernen/Überprüfen des Bewegungsablaufs. Das Einlernen/Überprüfen des Bewegungsablaufs kann daher besonders praxisnah erfolgen. Beispielsweise kann schon während des Einlernvorgangs eine drohende Kollision des Schweißkopfs bzw. des Kontaktrohrs mit dem Werkstück erkannt und vermieden werden. Das Starten des eingelernten Bewegungsablaufs, um dann die Schweißung herzustellen, kann daher relativ gefahrlos erfolgen.

In einer vorteilhaften Variante der Erfindung wird der Schweißdraht nach dem Starten des Wire-Touch-Sensing-Prozesses so lange herausgefahren, bis ein Stromfluss detektiert wird. Auf diese Weise kann der Abstand zwischen Schweißkopf und Werkstück festgestellt werden, ohne dass der Schweißkopf dazu in Richtung des Werkstücks bewegt werden müsste. Das Ermitteln des genannten Abstands kann daher besonders sicher erfolgen.

Besonders vorteilhaft ist es, wenn der Schweißdraht beim Verstellen des Schweißkopfes wiederholend zum Werkstück und vom Werkstück zurück bewegt wird, also die Kontur des Werkstücks abgetastet wird, solange die Länge nicht erreicht ist. In diesem Zusammenhang ist ein Verfahren zum Einlernen/Prüfen eines Bewegungsablaufs des Schweißroboters von Vorteil, umfassend die Schritte:
a) Anlegen der Prüfspannung zwischen dem Schweißdraht und dem Werkstück durch Aktiveren des Wire-Touch-Sensing-Porzesses,
b) Bewegen des Schweißkopfes entlang des genannten Bewegungsablaufs an dem Werkstück,
c) Herausfahren des beweglich gelagerten Schweißdrahts aus dem Schweißkopf bis dieses das Werkstück berührt und dadurch in dem Stromkreis, in welchem der Schweißdraht und das Werkstück liegt, ein Stromfluss bzw. ein Spannungseinbruch detektiert wird,
d) Zurückfahren des Schweißdrahts um eine vorgebbare Rückzugsstrecke, jedoch mindestens bis der Stromkreis wieder unterbrochen wird (der Schweißdraht berührt das Werkstück dann nicht mehr) und Wiederholen der Schritte a) bis d).
Bei dieser Variante der Erfindung wird der Schweißdraht laufend bis zur Werkstückoberfläche heraus- und dann wieder etwas zurückgefahren. Die Bewegung des Schweißdrahts ähnelt damit der Bewegung einer Nadel einer Nähmaschine. Dieses Heraus- und Zurückfahren erfolgt während der Schweißkopf entlang des genannten Bewegungsablaufs an dem Werkstück bewegt wird. Auf diese Weise können laufend Daten über den Abstand des Schweißkopfes zum Werkstück gewonnen werden und beispielsweise zur Korrektur eines zu erlernenden oder bereits gespeicherten Bewegungsablaufs herangezogen werden. Insbesondere bei den Online-Programmierverfahren wird der Schweißkopf vom Operator oder Programmierer zumeist nicht mit hinreichender Genauigkeit bewegt, d.h. der Schweißkopf wird in aller Regel nicht mit konstantem Abstand zum Werkstück geführt. Durch das ständige Abtasten mit dem Schweißdraht kann der Roboter aber gleichsam "erahnen" was vom Operator gewünscht ist, und den geplanten Bewegungsablauf hinsichtlich eines gleichbleibenden Abstands zwischen Schweißkopf und Werkstück optimieren beziehungsweise korrigieren. An dieser Stelle wird angemerkt, dass unter einer Wiederholung von Schritt a) sowohl das wiederholte Anlegen der Prüfspannung als auch das permanente Anlegen derselben zu verstehen ist. In diesem Sinne kann bei ständig anliegender Prüfspannung auch mit einer Wiederholung der Schritte b) bis d) das Auslangen gefunden werden. An dieser Stelle wird angemerkt, dass das oben genannten durch die Schritte a) bis d) gebildete Verfahren auch unabhängig von anderen Merkmalen, insbesondere unabhängig von den Merkmalen des Patentanspruchs 1, eine eigenständige Erfindung darstellen kann.

Günstig ist es auch, wenn die Länge, um welche der Schweißdraht aus dem Schweißkopf heraus- und/oder zurückgefahren wird gemessen wird, insbesondere manuell gemessen wird, oder über eine Ein- und/oder Ausgabevorrichtung eingestellt oder durch Berühren mit dem Werkstück definiert wird. Auf diese Weise ist der erfindungsgemäßen Steuerung jederzeit bekannt, an welcher Position sich der Schweißdraht beziehungsweise dessen Ende oder Spitze befindet.

Vorteilhaft ist es, wenn die Prüfspannung beziehungsweise der daraus resultierende Stromfluss kleiner als eine zur Ausbildung eines Lichtbogens erforderliche Spannung / ein zur Ausbildung eines Lichtbogens erforderlicher Strom bemessen sind. Auf diese Weise kann die Oberfläche des Werkstücks geschont werden, da es bei Berührung zwischen Schweißdraht und Werkstück zu keinen Abbrenn-Erscheinungen kommt.

Vorteilhaft ist es auch, wenn die Prüfspannung beziehungsweise der daraus resultierende Stromfluss kleiner als eine zum Abschmelzen des Schweißdrahts erforderliche Spannung / ein zum Abschmelzen des Schweißdrahts erforderlicher Strom bemessen sind. Auf diese Weise kann ebenfalls eine Beschädigung der Werkstückoberfläche vermieden werden. Desweiteren kann verhindert werden, dass die tatsächliche Länge, auf welche der Schweißdraht ausgefahren ist, kürzer ist, als die von der erfindungsgemäßen Steuerung angenommene Länge. Diese hat ja in der Regel keine Information darüber, ob beziehungsweise wie viel ein Schweißdraht abgeschmolzen ist.

Günstig ist es in diesem Zusammenhang zudem, wenn die Stromquelle die Energiemenge derart beschränkt, dass bei einem Kurzschluss keine Aufschmelzung des Schweißdrahtes und des Werkstückes zustande kommt, jedoch die Kontaktierung der beiden schnellst möglich erfasst wird, wobei jedoch die für den eigentlichen Schweißprozess weiteren Überwachungs-, Steuer- und Regelfunktionen, wie beispielsweise die Kurzschlussauflösung, die Drahtförderung, die Schutzgasversorgung, der Kühlkreislauf usw., des Schweißgerätes deaktiviert bleiben. Vorteilhaft werden also Module, die beim Training des Roboters ohnehin nicht benötigt werden ausgeschaltet, was einerseits die Sicherheit erhöht, andererseits aber auch den Energieverbrauch verringert.

Besonders vorteilhaft ist es, wenn die Prüfspannung beziehungsweise der daraus resultierende Stromfluss größer als eine zur Ausbildung eines Lichtbogens erforderliche Spannung / ein zur Ausbildung eines Lichtbogens erforderlicher Strom, jedoch kleiner als eine zum Abschmelzen des Schweißdrahts erforderliche Spannung / ein zum Abschmelzen des Schweißdrahts erforderlicher Strom bemessen sind. Besonders vorteilhaft ist es also mit anderen Worten, wenn die Prüfspannung beziehungsweise der daraus resultierende Stromfluss so eingestellt werden, dass beim Abheben des Schweißdrahts vom Werkstück sehr kurzzeitig ein kleiner Lichtbogen gezündet wird, dessen Thermische Energie aufgrund der kurzen Brenndauer jedoch so gering ist das kein Anschmelzen des Schweißdrahts bzw. Werkstücks erfolgt. Vorteilhaft ist daran, dass dieser dabei entstehende, gut sichtbare Lichtblitz, es dem Operator ermöglicht, die Position des Drahtendes am Werkstück sehr gut erkennen zu können und dies direkt an der Stelle erfolgt, die vom Operator gewöhnlich beobachtet wird. Dies ist umso vorteilhafter ,wenn zusätzlich die Lichtverhältnisse an der zu programmierenden Stelle schlecht sind.

Besonders vorteilhaft ist es auch, wenn
- der Schweißkopf im Bereich einer fertigen oder herzustellenden Schweißnaht quer zu deren Verlauf bewegt wird,
- die Position des Schweißkopfes und optional des Schweißdrahts gespeichert beziehungsweise ermittelt wird, wenn ein Stromfluss in dem genannten Stromkreis detektiert wird, und
- aus mehreren gespeicherten beziehungsweise ermittelten Positionen die Breite/Höhe der Schweißnaht und/oder die Lage des Schweißkopfes beziehungsweise des Schweißdrahts relativ zur Schweißnaht ermittelt wird.
Bei dieser Variante der Erfindung fungiert der Schweißroboter und die Stromquelle weniger als Schweißsystem sondern eher als Messgerät. Beispielsweise wird dazu der in eine vorbereitete V-Naht hineinragende Schweißdraht hin und her bewegt um die Lage der Werkstückteile zu "ertasten". Desgleichen kann die Überhöhung einer fertiggestellten Schweißnaht vermessen werden. Auf diese Weise können also geometrische Parameter der herzustellenden oder bereits fertigen Schweißnaht ermittelt werden. Denkbar ist auch die Anfertigung von Oberflächenprofilen beziehungsweise 3D-Darstellungen der Schweißnaht durch rasterförmiges Abtasten derselben. Auf diese Weise kann beispielsweise auch die Welligkeit der Schweißnaht gemessen beziehungsweise beurteilt werden. Durch diese Variante der Erfindung wird also der Funktionsumfang eines Schweißsystems dramatisch erweitert, da dieses nicht nur zum Schweißen sondern auch zur Qualitätskontrolle eingesetzt werden kann. Dafür muss es nicht einmal umgerüstet werden, denn die "Meßsonde" wird durch den Schweißdraht gebildet. Dadurch entfällt auch das zeitaufwändige Auflegen des Werkstücks auf einen dafür eigens vorgesehenen Messautomaten.

Vorteilhaft ist es weiterhin, wenn bei der Auswertung der Schweißdrahtförderung das längste Stickout (also die Länge, um welche der Schweißdraht aus dem Schweißbrenner herausragt), welchem die Mittelposition der Schweißnaht entspricht, ermittelt wird. Da die (unfertige) Schweißnaht die tiefste Stelle üblicherweise in der Mitte aufweist, kann die Mitte einfach durch Speichern der Position, bei dem das längste Stickout festgestellt wurde, ermittelt werden. Umgekehrt ist die (fertige) Schweißnaht üblicherweise in der Mitte am höchsten, sodass deren Mitte einfach durch Speichern der Position, bei dem das kürzeste Stickout festgestellt wurde, ermittelt werden kann.

Günstig ist es zudem, wenn ein Alarm ausgelöst wird, wenn ein Stromfluss oder ein Spannungseinbruch nicht detektiert wird, obwohl dies aus der Position des Schweißkopfes beziehungsweise des Schweißdrahts und den Werkstückkoordinaten zu erwarten wäre. Diese Problematik stellt sich vor allem dann, wenn die Form des Werkstücks und dessen Lage relativ zum Schweißroboter bekannt ist, d.h. im Wesentlichen dann, wenn ein bereits programmierter Bewegungsablauf überprüft werden soll. Wird die von der Robotersteuerung vermutete Spitze des Schweißdrahts an die Oberfläche des Werkstücks herangefahren ohne dass es zu einem Stromfluss oder Spannungseinbruch kommt, dann stimmt die von der Robotersteuerung vermutete Szenerie offenbar nicht mit der Realität überein, und es wird ein Alarm ausgelöst.

Besonders vorteilhaft ist es in diesem Zusammenhang, wenn bei der Auslösung des Alarms ein in einer Länge bemessener Toleranzwert und/oder - wenn der Schweißkopf / der Schweißdraht bewegt wird - ein in einer Zeitspanne bemessener Toleranzwert berücksichtigt wird. Damit nicht bei jeder kleinsten Unregelmäßigkeit Alarm ausgelöst wird, kann bei der Auslösung eines Alarms auch ein Toleranzwert berücksichtigt werden. Dieser kann in einer Länge oder - wenn eine Bewegung des Schweißkopfes und/oder des Schweißdrahts vorausgesetzt wird - auch in einer Zeitspanne bemessen sein.

In aller Regel ist ein Antriebssystem für den Schweißdraht vorhanden. Die Erfindung kann in diesem Fall daher besonders leicht in die Praxis umgesetzt werden. Zudem ist es leicht vorstellbar, dass bereits bestehende Schweißroboter mit den erfindungsgemäßen Funktionen erweitert werden. Das Anwendungsgebiet der Erfindung wird somit maßgeblich vergrößert. Zudem sind Schweißdrähte zumeist vergleichsweise dünn und eignen sich daher hervorragend als "Meßsonde", womit der Schweißroboter nicht nur zum Schweißen sondern auch zur Qualitätskontrolle sehr gut einsetzbar ist.

Besonders vorteilhaft ist ein Verfahren, bei dem zwischen einem elektrisch leitenden Teil des Schweißkopfes und dem Werkstück eine Prüfspannung angelegt wird und der Schweißkopf angehalten oder zurückgefahren wird, wenn in einem Stromkreis, in welchem der genannte leitende Teil und das Werkstück liegt, ein Stromfluss oder ein Spannungseinbruch detektiert wird. Bei dieser Variante der Erfindung werden die bereits genannten Prinzipien und daraus resultierenden Vorteile direkt auf den Schweißkopf angewandt, indem die Berührung von elektrisch leitenden Teilen desselben, beispielsweise einer metallischen Gasdüse, mit dem Werkstück detektiert wird. Trifft dies zu, wird wiederum ein Stromfluss in dem genannten Stromkreis detektiert. Diese Variante der Erfindung ist dabei nicht nur auf das Einlernen/Prüfen eines Bewegungsablaufes beschränkt, sondern kann auch während des Schweißens selbst angewandt werden. Auf diese Weise können unerwünschte Berührungen zwischen Schweißkopf und Werkstück also auch beim Abarbeiten eines Bewegungsablaufes erkannt und deren Folgen abgemildert werden.

Vorteilhaft ist es bei einer erfindungsgemäßen Schweißanlage, wenn eine automatische Ermittlung der Mittelposition einer Schweißraupe durchgeführt wird, bei der vom Schweißroboter der Schweißbrenner quer zur Schweißraupe bewegt wird. Auf diese Weise kann die Mitte einer Schweißraupe automatisch und gefahrlos ermittelt werden.

In diesem Zusammenhang ist es von Vorteil, wenn der Schweißdraht bei der Bewegung des Schweißbrenners quer zur Schweißraupe, insbesondere quer zu einer Kehlnaht, ständig auf das Werkstück zu und zurück bewegt wird, und anschließend eine Auswertung der Schweißdrahtförderung durchgeführt wird. Durch diese Maßnahme wird eine Kollision des Schweißgeräts mit dem Werkstück besonders wirkungsvoll vermieden, da der Schweißdraht stets nur sehr kurz in Kontakt mit dem Werkstück ist.

Günstig ist es, wenn der Schweißroboter eine Schweißstrom-/spannungsquelle umfasst, welche zur Erzeugung der Prüfspannung vorbereitet ist. Auf diese Weise kann die Schweißstrom-/spannungsquelle einen Doppelnutzen erfüllen, nämlich das Schweißen und das Einlernen/Prüfen eines Bewegungsablaufs ermöglichen.

Günstig ist es schließlich auch, wenn der Schweißroboter eine Schweißstrom-/spannungsquelle und eine weitere, zur Erzeugung der Prüfspannung vorbereitete Spannungs-/Stromquelle umfasst. Bei dieser Variante ist also eine gesonderte Spannungs-/Stromquelle zur Erzeugung der Prüfspannung vorgesehen. Die Prüfspannung lässt sich auf diese Weise unter Umständen leichter erzeugen, da ja insbesondere zwischen Schweißstrom und Prüfstrom mehrere Größenordnungen liegen.
Unter einer "Spannungs-/Stromquelle" ist im Rahmen der Erfindung jede elektrische Energiequelle mit beliebiger Charakteristik zu verstehen. Vorteilhaft werden aber sowohl für das Schweißen als auch für das Einlernen/Prüfen eines Bewegungsablaufs Energiequellen mit den dafür entsprechend benötigten, auswählbaren Charakteristiken verwendet, selbstverständlich aber in deutlich unterschiedlichen Strombereichen.

Zum besseren Verständnis der Erfindung wird diese anhand der nachfolgenden Figuren näher erläutert.
Es zeigen jeweils in stark schematisch vereinfachter Darstellung:
- Fig. 1: eine schematische Darstellung einer Schweißmaschine bzw. eines Schweißgerätes;
- Fig. 2: eine schematische Darstellung eines Schweißroboters;
- Fig. 3: ein Prinzipschaltbild des erfindungsgemäßen Prüfstromkreises;
- Fig. 4: einen über zwei Werkstückteilen, welche für eine Schweißnaht vorbereitet sind, positionierten Schweißbrenner vor einem Wire-Touch-Sensing-Prozess;
- Fig. 5: den Schweißbrenner aus Fig. 4 nach dem Starten des Wire-Touch-Sensing-Prozesses;
- Fig. 6: den Schweißbrenner aus Fig. 4, nach dem Zufahren auf ein Werkstückteil;
- Fig. 7: den Schweißbrenner aus Fig. 4, nach dem Zurückfahren des Schweißdrahts;
- Fig. 8: den Schweißbrenner aus Fig. 4, nach dem Zufahren auf das andere Werkstückteil;
- Fig. 9: den Schweißbrenner aus Fig. 4, nach der Detektion der Schweißnahtmitte;
- Fig. 10: eine zu vermessende Y-Schweißnaht vor deren Herstellung;
- Fig. 11: eine zu vermessende Y-Schweißnaht nach deren Herstellung;
- Fig. 12: ein Flussdiagramm zur Visualisierung des erfindungsgemäßen Verfahrens und
- Fig. 13: Sub-Routinen für das Flussdiagramm gemäß Fig. 12.
Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.
Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

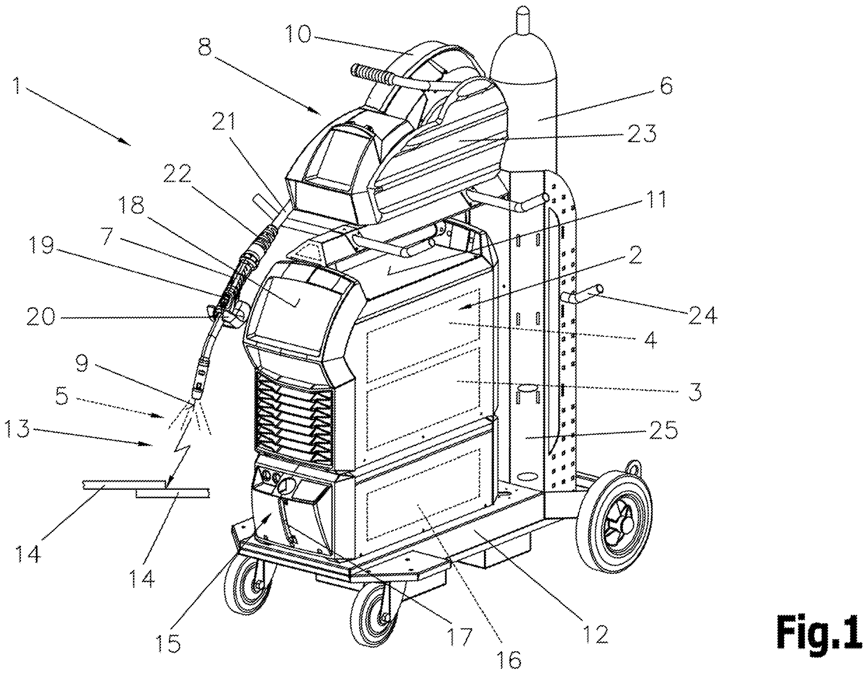

In Fig. 1 ist ein an sich bekanntes Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw. Die Steuervorrichtung 4 ist beispielsweise mit einem Steuerventilen verbunden, welches in einer Versorgungsleitung für ein Gas 5, insbesondere ein Schutzgas, wie beispielsweise CO2, Helium oder Argon und dgl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches häufig für das MIG/MAG-Schweißen verwendet wird, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf eine Fahrwagen 12 positioniert ist. Hierbei wird von einem so genannten "Kompakten Schweißgerät" 1 gesprochen. Dabei ist es auch möglich, dass das Drahtvorschubgerät 8 direkt auf das Schweißgerät 2 aufgesetzt werden kann, d.h., dass das Gehäuse 11 der Stromquelle 2 auf der Oberseite zur Aufnahme des Drahtvorschubgerätes 8 ausgebildet ist, sodass der Fahrwagen 12 entfallen kann.

Es ist auch möglich, dass das Drahtvorschubgerät 8 den Schweißdraht 9 bzw. den Zusatzwerkstoff außerhalb des Schweißbrenners 7 an die Prozessstelle zuführt, wobei hierzu im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem bevorzugt aus einem oder mehreren Teilen gebildeten Werkstück 14 wird über eine Schweißleitung, nicht dargestellt, vom Leistungsteil 3 der Stromquelle 2, dem Schweißbrenner 7, insbesondere der Elektrode bzw. dem Schweißdraht 9, zugeführt, wobei das zu verschweißende Werkstück 14 über eine weitere Schweißleitung für das weitere Potential, insbesondere das Masse-Kabel, mit der Stromquelle 2 (nicht dargestellt) verbunden ist und somit über den Lichtbogen 13 bzw. den gebildeten Plasmastrahl für einen Prozess ein Stromkreis aufgebaut werden kann. Bei Verwendung eines Brenners mit internen Lichtbogen 13 sind die beiden Schweißleitungen, nicht dargestellt, zum Brenner geführt, sodass im Brenner ein entsprechender Stromkreis aufgebaut werden kann, wie dies bei Plasma-Brenner der Fall sein kann.

Zum Kühlen des Schweißbrenners 7 kann der Schweißbrenner 7 über ein Kühlgerät 15 unter Zwischenschaltung ev. Komponenten, wie beispielsweise einem Strömungswächter, mit einem Flüssigkeitsbehälter, insbesondere einem Wasserbehälter 16 mit einer Füllstandsanzeige 17, verbunden werden, wodurch das Kühlgerät 15 bei der Inbetriebnahme des Schweißbrenners 7, insbesondere eine für die im Wasserbehälter 16 angeordnete Flüssigkeit verwendete Flüssigkeitspumpe, gestartet wird und somit eine Kühlung des Schweißbrenners 7 bewirkt werden kann. Wie bei dem dargestellten Ausführungsbeispiel gezeigt, wird das Kühlgerät 15 auf dem Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiterhin eine Ein- und/oder Ausgabevorrichtung 18 auf, über die die unterschiedlichsten Schweißparameter, Betriebsarten oder Schweißprogramme des Schweißgerätes 1 eingestellt bzw. aufgerufen und angezeigt werden können. Dabei werden die über die Ein- und/oder Ausgabevorrichtung 18 eingestellten Schweißparameter, Betriebsarten oder Schweißprogramme an die Steuervorrichtung 4 weitergeleitet, und von dieser werden anschließend die einzelnen Komponenten der Schweißanlage bzw. des Schweißgerätes 1 angesteuert bzw. entsprechende Sollwerte für die Regelung oder Steuerung vorgegeben. Hierbei ist es auch möglich, dass bei Verwendung eines entsprechenden Schweißbrenners 7 auch Einstellvorgänge über den Schweißbrenner 7 vorgenommen werden können, wobei dazu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist ein Startschalter, nicht dargestellt, auf, sodass durch Betätigen des Startschalters der Lichtbogen 13 gezündet werden kann. Um gegen die große Hitzeeinstrahlung vom Lichtbogen 13 geschützt zu werden, ist es möglich, dass der Schweißbrenner 7 mit einem Hitzeschutzschild 20 ausgestattet wird.

Weiterhin ist in dem dargestellten Ausführungsbeispiel der Schweißbrenner 7 über ein Schlauchpaket 21 mit dem Schweißgerät 1 bzw. der Schweißanlage verbunden, wobei das Schlauchpaket 21 über einem Knickschutz 22 am Schweißbrenner 7 befestigt ist. In dem Schlauchpaket 21 sind die einzelnen Leitungen, wie beispielsweise die Versorgungsleitung bzw. Leitungen für den Schweißdraht 9, für das Gas 5, für den Kühlkreislauf, für die Datenübertragung, usw., vom Schweißgerät 1 zum Schweißbrenner 7 angeordnet, wogegen das Masse-Kabel bevorzugt extra an der Stromquelle 2 angeschlossen wird. Das Schlauchpaket 21 wird über eine Kupplungsvorrichtung (nicht dargestellt) an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpaketes 21 gewährleistet ist, kann das Schlauchpaket 21 über eine Zugentlastungsvorrichtung, nicht dargestellt, mit dem Gehäuse 11 der Stromquelle 2 oder dem Drahtvorschubgerät 8 verbunden sein.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 7 als luftgekühlter Schweißbrenner 7 ausgeführt werden kann, sodass beispielsweise das Kühlgerät 15 entfallen kann. Weiterhin ist es möglich, dass noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6, usw. angeordnet bzw. eingesetzt werden können.

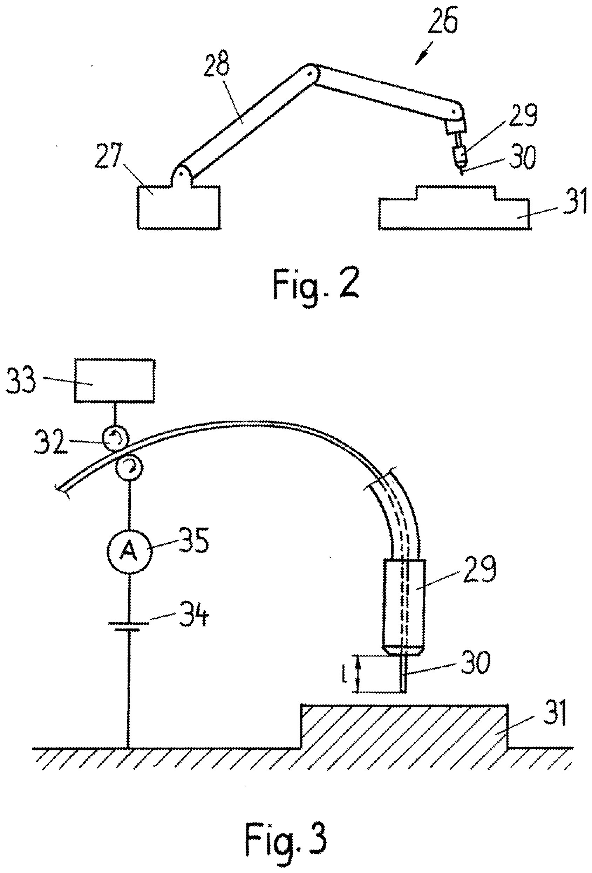

Fig. 2 zeigt nun stark vereinfacht einen Schweißroboter 26, mit einer Roboterbasis 27, einem Roboterarm 28 und einem Schweißkopf 29, aus dem ein Schweißdraht 30 herausragt. In der Fig. 2 ist zudem ein beispielhaftes Werkstück 31 dargestellt. Der in der Fig. 2 dargestellte Schweißroboter 26 weist ein an sich bekanntes erstes Antriebssystem mit einer an sich bekannten ersten Antriebssteuerung (nicht dargestellt) für den Schweißkopf 29 auf. Weiterhin kann der Schweißroboter 26 die zu der Fig. 1 genannten Baugruppen in prinzipiell bekannter Zusammenstellung umfassen.

Fig. 3 zeigt nun ein vereinfachtes elektrisches Schaltbild des Schweißroboters 26. Darin ist wiederum der Schweißkopf 29 mit dem herausragenden Schweißdraht 30 über dem Werkstück 31 dargestellt. Der Schweißdraht 30 kann über zwei Rollen 32, wobei mindestens eine angetrieben ist, aus dem Schweißkopf 29 ausgefahren und auch wieder zurückgefahren werden. Die Antriebsrolle(n) 32 bilden somit das zweite Antriebssystem. Dieses wird von einer zweiten Antriebssteuerung 33 angesteuert. Zwischen die Rollen 32 und das Werkstück 31 ist eine Spannungs-/Stromquelle 34 sowie ein in Serie liegendes Amperemeter 35 geschaltet. Alternativ oder zusätzlich kann auch ein Voltmeter zum Messen der durch die Spannungs-/Stromquelle 34 erzeugte Prüfspannung vorgesehen sein (nicht dargestellt). Vorteilhaft kann auch die Länge 1, um welche der Schweißdraht 30 aus dem Schweißkopf 29 herausgefahren wird, gemessen werden, beispielsweise mit Hilfe von Drehwinkelgebern an den Rollen 32 oder durch optische Bildverarbeitung, bei der die an einem optischen Sensor vorbeiziehende Oberflächenstruktur des Schweißdrahts 30 ausgewertet wird.

Eine erste Funktionsvariante des in den Figuren 2 und 3 dargestellten Schweißroboters 26 ist nun wie folgt:
In einem ersten Schritt wird der Schweißdraht 30 um eine vorgebbare Länge 1 (engl. "stickout") aus dem Schweißkopf 29 herausgefahren. Sodann wird eine Position am Werkstück 31 angefahren. Diese kann manuell angefahren werden, z. B. um einen Bewegungsablauf für den Schweißroboter 26 festzulegen ("Teach-In"), oder automatisch angefahren werden, beispielsweise um einen gespeicherten Bewegungsablauf zu prüfen. Insbesondere bei nach den aus dem Stand der Technik bekannten Verfahren führen die in dieser Phase zum Teil noch sehr unausgereiften Bewegungsabläufe zu oftmaligen und häufig unsanften Berührungen zwischen dem Schweißdraht 30 und dem Werkstück 31. Im Extremfall kann sogar der Schweißkopf 29 gegen das Werkstück 31 stoßen. Dies führt zu einem Verbiegen des Schweißdrahtes 30 oder sogar zu einer Beschädigung des Schweißkopfes 29. Beides hat einen Zeitverlust während des Einlern-/Prüfvorgangs zur Folge, da das verbogene Ende des Schweißdrahts 30 manuell entfernt und/oder der Schweißkopf 29 repariert werden muss.

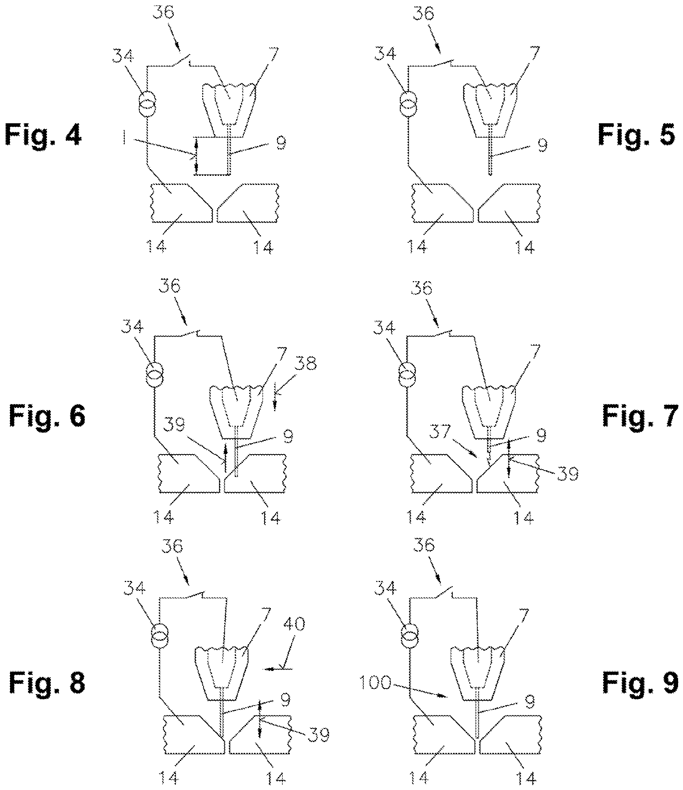

In den Fig. 4 bis 9 ist nun ein Ablauf eines Teaching-Prozesses, bei dem zumindest eine Ausgangsposition und/oder Endposition am Werkstück 14 bzw. Werkstück 31 für den Schweißbrenner 7 bzw. Schweißkopf 29 eingestellt und gespeichert wird, vereinfacht dargestellt. Üblicherweise wird eine Vielzahl derartiger Positionen manuell festgelegt, sodass anschließend ein entsprechender Schweißprozess entlang einer Bahn durch Berechnen der dazwischen liegenden Positionen durchgeführt werden kann. Hierbei wird manuell vom Benutzer der Vorgang durchgeführt und dient zur Speicherung der verschiedensten Positionen entlang eines Werkstückes 14.

Beim so genannten Teachen wird zuerst der Schweißbrenner 7, der am Ende, insbesondere an der letzten Achse des Schweißroboter 26 befestigt ist, mit einem manuellen Einstellvorgang des Schweißroboters 26 über ein Roboterbedienpult vom Benutzer derart gesteuert, dass der Schweißbrenner 7 beispielsweise über dem Werkstück 14 positioniert ist, wie dies in Fig. 4 ersichtlich ist. Üblicherweise sind hierbei die Stromversorgung des Schweißbrenners 7 und weitere Steuer- und Regelsysteme vom Schweißgerät 1 deaktiviert, sodass es zu keinen unvorhergesehen Stromflüsse bei einem ungewollten Kurzschluss kommen kann. Bevorzugt wird vor dem Positionieren des Schweißbrenners 7 vom Benutzer der Schweißdraht 9 zuerst gekürzt, sprich an der Stirnfläche des Kontaktrohres abgezwickt und anschließend durch Vorgabe einer Länge 1, also eines sogenannte "Stickouts", ausgefahren, sodass der Schweißdraht 9 entsprechend die richtige Position für eine Schweißung einnimmt. Diesen Vorgang kann der Benutzer manuell am Schweißgerät 1 vornehmen oder - wenn vorhanden - über das Bedienpult einleiten. Somit können die Positionen mit dem für den Schweißprozess erforderlichen Stickout 1 festgelegt werden. Dies hat den Vorteil, dass beim Teachen auf den entsprechenden Abstand des Schweißbrenners 7 zum Werkstück 14 mit dem benötigten Stickout 1 geachtet werden kann.

Hat der Benutzer den Schweißbrenners 7 grob über eine von ihm gewünschte Ausgangsstellung am Werkstück 14 mit entsprechender Stickoutläng 1 positioniert (siehe Fig. 4), so wird nunmehr erfindungsgemäß ein so genannter "Wire-Touch-Sensing-Prozess" am Schweißgerät 1 gestartet, wie dies in Fig. 5 schematisch durch Aktivieren des Schalters 36 dargestellt ist. Dies kann auf die unterschiedlichsten Arten erfolgen. Beispielspeise kann dieser Vorgang durch Aktivieren eines Tasters/Schalters 36 auf einem Roboterbedienpult (nicht dargestellt) aktiviert werden, oder der Benutzer betätigt einen Taster 36 am Schweißgerät 1 oder an einem Fernsteller. Bei der Aktivierung des Teaching-Prozesses wird der Schweißbrenner 7, insbesondere der Schweißdraht 9, und das Werkstück 14 mit einer Teaching-Stromquelle 34 im Schweißgerät 1 verbunden, sodass ein Stromkreis zwischen diesen gebildet werden kann. Selbstverständlich ist es möglich, dass anstelle der eigens dafür eingesetzten Teaching-Stromquelle 34 auch das Leistungsteil, also die Stromquelle 2 des Schweißgerätes 1 eingesetzt werden kann. Die Stromquelle 34 hat die Aufgabe die Energiemenge derart zu beschränken, dass bei einem Kurzschluss, also einem Kontakt des Schweißdrahtes 9 mit dem Werkstück 14 keine Aufschmelzung des Schweißdrahtes 9 und des Werkstückes 14 zustande kommt, jedoch die Kontaktierung der beiden schnellst möglich erfasst wird, wobei jedoch die für den üblichen Schweißprozess weiteren Überwachungs-, Steuer- und Regelfunktionen, wie beispielsweise die Kurzschlussauflösung, die Drahtförderung, die Schutzgasversorgung, Kühlkreislauf usw., des Schweißgerätes 1 deaktiviert bleiben. Bevorzugt gibt die Stromquelle 34 eine derart hohe Energiemenge ab, dass beim Abheben des Schweißdrahtes 9 vom Werkstück 14 ein leicht sichtbarer kurzer Lichtbogen 37 gezündet wird, der jedoch nach einer vorgebbaren Zeitdauer gelöscht wird oder aufgrund eines zu großen Abstands zwischen Werkstück 14, 31 und Schweißdraht 9 automatisch löscht.

Nachdem der Benutzer den Wire-Touch-Sensing-Prozess aktiviert hat, sprich die Stromquelle 34 für die Überwachung eines Kurzschlusses aktiviert wurde, kann dieser nun den Schweißbrenner 7 exakt auf der Bahn am Werkstück 14 positionieren. Dazu wird der Schweißbrenner 7 manuell über das Roboterbedienpult horizontal und/oder vertikal bewegt, wobei der Benutzer nunmehr die Möglichkeit hat, die Positionierung über den Schweißdraht 9 durchzuführen, d.h., dass er den Schweißbrenner 7 derart führt, bis das Ende des Schweißdrahts 9 an der gewünschten Position - beispielsweise an der Position 100 gemäß Fig. 9 - positioniert ist. Beispielsweise wird der Schweißbrenner 7 gemäß Fig. 6 vertikal in Richtung des Werkstücks 14 gemäß Pfeil 38 bewegt. Da nunmehr der Wire-Touch-Sensing-Prozess aktiviert ist, braucht der Benutzer keine Rücksicht mehr auf den Schweißdraht 9, insbesondere auf das Berühren des Schweißdrahtes 9 mit dem Werkstück 14 nehmen, da mit dem Wire-Touch-Sensing-Prozess ein so genannter Kollisionsschutz vorhanden ist und somit verhindert wird, dass der Schweißdraht 9 bei Kontakt mit dem Werkstück 14 verbogen wird. Somit kann der Benutzer, wie dargestellt, ohne Probleme den Schweißbrenner 7 auf das Werkstück 14 hinbewegen, da mit Erkennung des Kurzschlusses der Schweißdraht 9 zurückbewegt wird und somit die Stickoutlänge 1 unterschritten/reduziert wird, wie strichliert in Fig. 6 dargestellt ist. Dies hat den Vorteil, dass der Benutzer somit die exakte Position des Schweißbrenners 7 am Werkstück 14 und somit die Abweichung zur gewünschten Position 100 sehen kann. Auch kann aufgrund der Position des Schweißdrahts 9 auf das Zentrum des Schweißbrenners 7 rückgeschlossen werden, da nunmehr kein Abstand zwischen dem Schweißdraht 9 und dem Werkstück 14 vorhanden ist und die Ausrichtung des Schweißdrahts 9 nicht verändert wurde.

Da also der Wire-Touch-Sensing-Prozess aktiviert ist, erkennt das Schweißgerät 1 den Kurzschluss und fördert den Schweißdraht 9 gemäß Pfeil 39 in Fig. 6 sofort zurück. Steuert der Benutzer nach wie vor den Schweißbrenner 7 in Richtung des Werkstückes 14, so wird durch das automatisch eingeleitete Rückfördern des Schweißdrahtes 9 verhindert, dass der Schweißdraht 9 verbogen wird, d.h., dass der Benutzer auf das Stickout 1 des Schweißdrahtes 9 keine Rücksicht nehmen muss und den Schweißbrenner 7 beliebig nah an das Werkstück 14 heranfahren kann, da der Schweißdraht 9 sofort bei Erkennen eines Kurzschlusses entgegen der Schweißbrennerbewegung zurück gefördert wird und somit ein Verbiegen des Schweißdrahtes 9 verhindert wird.

Wird vom Benutzer die Schweißbrennerbewegung in Richtung zum Werkstück 14 gestoppt, so wird das Zurückfördern des Schweißdrahtes 9 jedoch fortgesetzt, da ja noch ein Kurzschluss vorhanden ist. Gemäß Fig. 7 ist ersichtlich, dass der Schweißdraht 9 immer so weit zurück bewegt wird, bis dieser von der Oberfläche des Werkstückes 14 abhebt und beispielsweise ein Lichtbogen 37 zur optischen Wahrnehmung der Position gezündet wird. Anschließend wird die Rückförderung gestoppt und vom Schweißgerät 1 die Förderung des Schweißdrahtes 9 auf seine Länge 1 eingeleitet, d.h., dass nach den Abheben des Schweißdrahtes 9 vom Werkstück 14, 31 die Drahtförderung umgekehrt wird und der Schweißdraht 9 auf seine Stickoutlänge 1 gefördert wird oder bei einem neuerlichen Kurzschluss der Vorgang wiederholt wird. Es wird also eine ständige Vor-/Rückbewegung - wie schematisch gemäß Pfeil 39 in Fig. 7 dargestellt - durchgeführt, solange der Schweißbrenner 7 einen geringeren Abstand zum Werkstück 14, 31 aufweist, als die eingestellte Länge/Stickoutlänge 1 beträgt. Grundsätzlich ist zu erwähnen, dass die Rückfördergeschwindigkeit vorzugsweise derart gewählt wird, dass diese schneller als die Vorwärtsbewegung des manuell gesteuerten Schweißbrenners 7 ist, sodass ein Verbiegen des Schweißdrahtes 9 verhindert wird, da der Schweißbrenner 7 nicht so schnell ans Werkstück 14 gefahren werden kann, wie der Schweißdraht 9 zurück gefördert wird. Bevorzugt ist die Stromquelle 34 derart ausgelegt, dass der Lichtbogen 37 beim Abheben des Schweißdrahtes 7 vom Werkstück 14 gezündet wird, wie dies in Fig. 7 dargestellt ist. Durch das kurzzeitige Aufblitzen des Lichtbogens 37 wird in vorteilhafter Weise nämlich erreicht, dass der Benutzer bei schlechter Ausleuchtung des Werkstückes 14 insbesondere bei schwer zugänglichen Autokaroserien, die Position besser feststellen/einschätzen kann, da durch die kontinuierliche Auf/Ab-Bewegung des Schweißdrahtes 9 eine mehrmalige Zündung des Lichtbogens 37 erfolgt und somit eine Ausleuchtung des Umfeldes geschaffen wird wodurch die Abweichung zur gewünschten Position 100 ersichtlich ist.

Wie nun in den Fig. 6 und 7 ersichtlich ist, ist der Schweißbrenner 7 noch nicht mittig am Werkstück 14, insbesondere an der geplanten Position 100, positioniert, sodass der Benutzer eine weitere Korrektur des Schweißbrenners 7 vornimmt und diesen beispielsweise seitlich verstellt, wie dies in Fig. 8 gemäß Pfeil 40 dargestellt ist. Dabei wird der Schweißdraht 9 bei Auftreten eines Kurzschlusses ständig zurück und wieder nach vor bis zum nächsten Kurzschluss oder der vorgegebenen Länge 1 gefördert. In dem dargestellten Beispiel in Fig. 8 ist der Schweißbrenner 7 wiederum innerhalb der Länge 1 am Werkstück 14 positioniert, sodass eine ständige Auf- und Abbewegung des Schweißdrahtes 9 gemäß Pfeil 39 erfolgt, sodass gleichzeitig während der horizontalen Bewegung von der Position des Schweißbrenners 7 gemäß Fig. 7 zur Position des Schweißbrenners 7 gemäß Fig. 8 - gemäß Pfeil 40 - der Schweißdraht 9 somit die Oberfläche des Werkstückes 14, also die Kontur, durch die ständige Auf-/Abbewegung abfährt ohne sich dabei zu verbiegen. Man kann also sagen, dass durch entsprechend nahes Positionieren des Schweißbrenners 7 innerhalb der Stickoutlänge 1 die Oberfläche des Werkstückes 14 mit dem Schweißdraht 9 abgefahren wird, wodurch eine sehr exakte Einstellung/Positionierung des Schweißbrenners 7 ermöglicht wird, da sozusagen der Schweißdraht 9 direkt auf dem Werkstück 14 positioniert ist und somit die Position 100 des Schweißbrenners 7 überträgt.

Hat der Benutzer die gewünschte Position 100, beispielsweise den Mittelpunkt einer Schweißraupe, manuell eingestellt, wie in Fig. 9 dargestellt, so beendet er beispielsweise durch abermaliges Betätigen des Schalters 36 oder eines Tasters den Wire-Touch-Sensing-Prozess, wodurch die Stromquelle 34 vom Schweißbrenner 7 getrennt wird. Gleichzeitig ist es möglich, dass automatisch beim Beenden eine Speicherung der Position des Schweißbrenners 7, also der Schweißroboterposition, erfolgt oder das Speichern der Position manuell vom Benutzer eingeleitet wird. Es ist auch möglich, dass nach dem Einrichten des Schweißbrenners 7 sofort ein Schweißprozesses gestartet werden kann.

Es ist aber auch möglich, dass beim Beenden des Wire-Touch-Sensing-Prozesses ein Warnsignal ausgegeben wird, wenn der Schweißbrenner 7 innerhalb der Stickoutlänge 1 - also zu nahe am Werkstück 14 - positioniert ist, sodass der Benutzer dies durch einfaches Zurückfahren des Schweißbrenners 7 beheben kann. Weiters ist es aber auch möglich, dass die Vor-/Rückbewegung beim Beenden des Wire-Touch-Sensing-Prozesses gestoppt wird, auch wenn der Schweißbrenner 7 innerhalb der Stickoutlänge 1 positioniert ist, wobei hierzu jedoch der Schweißdraht 9 zuerst zurück gefördert wird, bis der Kurzschluss aufgehoben ist und anschließend die Vor-/Rückbewegung gestoppt wird und somit kein Kurzschluss mehr vorhanden ist. Selbstverständlich ist es möglich, dass noch weitere Sicherheitsfunktionen integriert sein können, die verhindern, dass es beim Start eines Schweißprozesses zu Problemen kommen kann.

Weiters ist es möglich, dass der Benutzer beim Wire-Touch-Sensing-Prozess unterschiedliche Einstellungen vornehmen kann. Einerseits kann ein Wire-Touch-Sensing-Prozess gewählt werden, bei dem der Schweißdraht 9 entsprechend einer vorgebbaren Stickoutlänge 1, wie in den Fig. 4 bis 9 beschrieben, positioniert ist oder andererseits der Schweißdraht 9 immer bis zur Berührung mit dem Werkstück 14 unabhängig einer Stickoutlänge 1 ausgefahren wird, d.h., dass der Schweißdraht 9 beim Starten des Wire-Touch-Sensing-Prozesses automatisch in Richtung des Werkstückes 14 gefördert wird, bis dieser mit dem Werkstück 14 einen Kurzschluss verursacht.

Selbstverständlich kann der Wire Touch-Sensing-Prozess, welcher soeben manuell beschrieben wurde, auch automatisiert durchgeführt werden. Dabei wird beispielsweise die Stickoutlänge 1 im Wesentlichen kontinuierlich überwacht und entsprechend die Höhenposition des Schweißbrenners 7 angepasst und somit die gewünschte Position 100 festgelegt.

In einer vorteilhaften Variante wird eine notwendige Verzögerung des Schweißbrenners 7 mit Hilfe seiner momentanen Geschwindigkeit und mit Hilfe der Länge 1 unter Berücksichtigung eines Sicherheitsabstandes berechnet. Bezeichnet s die Länge 1 abzüglich des Sicherheitsabstands, so kann die nötige Verzögerung a leicht mit der Gleichung a=v²/2s ermittelt werden, wobei v die Geschwindigkeit des Schweißbrenners 7 angibt.

Nachdem die Gefahrensituation geklärt wurde, kann der Schweißdraht 9 wieder auf die Länge 1 ausgefahren werden, um eine neue Position im Bewegungsablauf des Schweißbrenners 7 anzufahren.

Vorteilhaft entspricht der Abstand des Schweißbrenners 7 vom Werkstück 14 später beim Schweißen dem Abstand, wenn der um die vorgebbare Länge 1 herausgefahrene Schweißdraht 9 das Werkstück 14 berührt. Der Schweißbrenner 7 nimmt also beim Einlernen/Überprüfen des Bewegungsablaufs dieselbe Lage relativ zum Werkstück 14 ein wie beim Schweißen. Auf diese Weise ist ein besonders einfaches Teachen möglich. Dabei wird der Schweißbrenners 7 manuell und vergleichsweise rasch an einer gewünschten Position an das Werkstück 14 gefahren. Berührt der Schweißdraht 9 das Werkstück 14, so wird einerseits die Position abgespeichert, andererseits wird wie oben beschrieben eine Kollision verhindert, ohne dass der Operator dazu aber den Schweißbrenner 7 manuell abbremsen müsste. Dies kann vollautomatisch erfolgen.

In einer weiteren Variante der Erfindung wird zwischen einem elektrisch leitenden Teil des Schweißbrenners 7, beispielsweise einer metallischen Gasdüse, und dem Werkstück 14 eine Prüfspannung angelegt. Wird in einem Stromkreis, in welchem der genannte leitende Teil des Schweißbrenners 7und das Werkstück 14 liegt, ein Stromfluss und oder Spannungseinbruch detektiert, dann wird der Schweißbrenner 7angehalten oder zurückgefahren. Denkbar ist dazu, dass neben dem Schweißdraht 9 auch eine Gasdüse des Schweißbrenners 7an die Spannungs-/Stromquelle 34 angeschlossen ist. Beispielsweise können Kontaktrollen (nicht dargestellt) im Schweißbrenner 7die Prüfspannung vom Schweißdraht 9 abnehmen und an die Gasdüse weiterleiten oder über den Düsenstock eine leitende Verbindung mit der Gasdüse hergestellt werden. Denkbar ist auch, dass eine gesonderte Leitung in einem Schlauchpaket vorgesehen wird, um die Prüfspannung zur Gasdüse zu leiten. Das Amperemeter 35 oder die elektronische Detektionsvorrichtung detektiert dann sowohl Berührungen zwischen dem Schweißdraht 9 und dem Werkstück 17 als auch zwischen dem Schweißbrenner 7und dem Werkstück 14. Denkbar ist auch, dass für den Schweißbrenner 7ein eigener, zweiter Prüfstromkreis vorgesehen wird. Dafür wird zumindest ein weiteres Amperemeter oder Detektionsmittel und - wenn der zusätzliche Prüfstromkreis völlig getrennt ausgeführt wird - auch eine weitere Spannungs-/Stromquelle benötigt. Vorteilhaft kann dann unterschieden werden, ob der Schweißdraht 9 oder der Schweißbrenner 7das Werkstück 14 berührt. Das Detektieren einer Berührung zwischen dem Schweißbrenner 7und dem Werkstück 14 ist dabei nicht nur auf das Einlernen/Prüfen eines Bewegungsablaufes beschränkt, sondern kann auch während des Schweißens selbst angewandt werden. Auf diese Weise können unerwünschte Berührungen zwischen Schweißbrenner 7und Werkstück 14 auch beim Abarbeiten eines Bewegungsablaufes erkannt und deren Folgen abgemildert werden.

In einer weiteren Variante der Erfindung wird die Breite/Höhe einer (fertigen oder herzustellenden) Schweißnaht und/oder die Lage des Schweißkopfes 29 beziehungsweise des Schweißdrahts 30 relativ zur Schweißnaht unter Bezugnahme auf die in den Figuren 2 und 3 dargestellte Anordnung ermittelt.

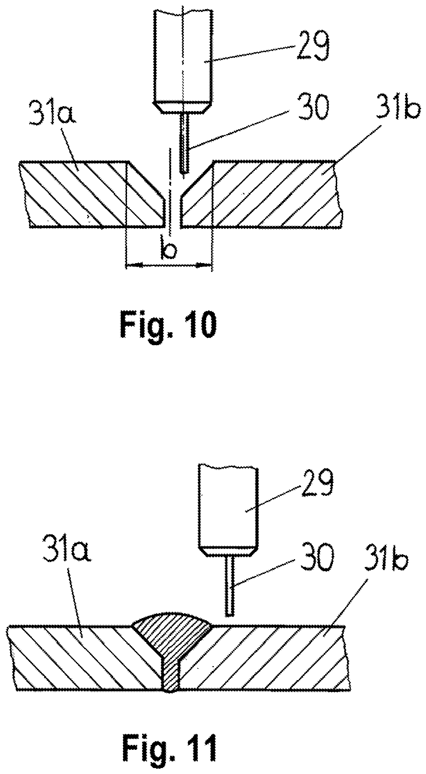

Fig. 10 zeigt dazu zwei für eine Schweißung (hier für eine Y-Naht) vorbereitete Werkstückteile 31a und 31b sowie den Schweißkopf 29 und den herausragenden Schweißdraht 30. Der Schweißkopf 29 wird nun im Bereich der Schweißnaht quer zu deren Verlauf bewegt. Dabei wird die Position des Schweißkopfes 29 und optional des Schweißdrahts 30 gespeichert beziehungsweise ermittelt, wenn das Amperemeter 35 einen Stromfluss detektiert, d.h. wenn der Schweißdraht 30 das Werkstück 31 berührt. Aus mehreren gespeicherten beziehungsweise ermittelten Positionen wird sodann die Breite b der Schweißnaht und/oder die Lage des Schweißkopfes 29 beziehungsweise des Schweißdrahts 30 relativ zur Schweißnaht ermittelt (siehe hierzu auch den Versatz der Mittelachse der Schweißnaht zur Mittelachse des Schweißkopfes 29 beziehungsweise des Schweißdrahts 30).

Fig. 11 zeigt die Naht aus Fig. 10 nach der Fertigstellung. Auch hier kann die Breite b der Schweißnaht und/oder die Lage des Schweißkopfes 29 beziehungsweise des Schweißdrahts 30 relativ zur Schweißnaht ermittelt werden. Dies erfolgt ganz ähnlich wie zu Fig. 4 beschrieben, bloß fährt der Schweißkopf 29 nun von außen an die Schweißnaht heran.

Selbstverständlich kann in den in den Fig. 10 und 11 gezeigten Fällen auch das Höhenprofil der Schweißnaht vermessen werden. So kann zum Beispiel die Tiefe der Abfasung bei der Y-Naht oder auch die Höhe der in Fig. 11 über die Werkstückoberfläche ragenden Schweißnaht gemessen werden. Auf diese Weise kann der Schweißroboter 26 nicht nur zum Schweißen eingesetzt werden, sondern auch für die Qualitätskontrolle, indem die Schweißnaht nach dem Schweißen vermessen wird. Denkbar ist auch die Anfertigung von Oberflächenprofilen beziehungsweise 3D-Darstellungen der Schweißnaht durch rasterförmiges Abtasten derselben. Auf diese Weise kann beispielsweise auch die Welligkeit der Schweißnaht gemessen beziehungsweise beurteilt werden.

In einer weiteren Variante der Erfindung wird ein Alarm für einen Defekt im Stromkreis oder in einem Antriebssystem des Schweißdrahts 30 (hier im Wesentlichen bestehend aus den Rollen 32 und der zweiten Antriebssteuerung 33) ausgelöst wird, wenn ein Stromfluss nicht detektiert wird, obwohl dies aus der Position des Schweißkopfes 29 beziehungsweise des Schweißdrahts 30 und den Werkstückkoordinaten zu erwarten wäre. Diese Problematik stellt sich vor allem dann, wenn die Form des Werkstücks 31 und dessen Lage relativ zur Roboterbasis 27 bekannt ist (z.B. beim Überprüfen eines bereits gespeicherten Bewegungsablaufs). Wird die von der Robotersteuerung vermutete Spitze des Schweißdrahts 30 an die Oberfläche des Werkstücks 31 herangefahren ohne dass es zu einem Stromfluss kommt, dann stimmt die von der Robotersteuerung vermutete Szenerie nicht mit der Realität überein.

Dies kann mehrere Gründe haben: Beispielsweise kann ein anderes Werkstück 31 als das erwartete auf der Bearbeitungsfläche aufgelegt sein. Auch kann eine Robotersteuerung beziehungsweise das erste Antriebssystem defekt sein, sodass sich der Schweißkopf 29 real anderswo befindet als von der Robotersteuerung angenommen wird. Dasselbe gilt für das zweite Antriebssystem (hier die Rollen 32) und dessen Steuerung 33). Beispielsweise kann der Schweißdraht 30 zwischen den Rollen 32 durchgerutscht sein, sodass die reale Länge 1 nicht der erwarteten Länge entspricht. Auch kann die Spannungs-/Stromquelle 34 oder das Amperemeter/Detektionsmittel 35 defekt sein. Eine weitere Möglichkeit wäre auch, dass der Schweißdraht 30 unerkannt abgeschmolzen ist und sich die Spitze desselben real anderswo befindet als erwartet. Dies kann zum Beispiel passieren wenn die Spannungs-/Stromquelle 34 zu stark eingestellt ist, beispielsweise weil sie irrtümlich auf einen dickeren Schweißdraht 30 als dem, der tatsächlich verwendet wird, eingestellt wurde.

Damit nicht bei jeder kleinsten Unregelmäßigkeit Alarm ausgelöst wird, kann bei der Auslösung eines Alarms auch ein Toleranzwert berücksichtigt werden. Dieser kann in einer Länge bemessen sein, z.B. einige Zehntelmillimeter, oder - wenn eine Bewegung des Schweißkopfes 29 und/oder des Schweißdrahts 30 vorausgesetzt wird - auch in einer Zeitspanne bemessen sein, z.B. einige Zehntelsekunden.

Die Erfindung wurde bis dato im Zusammenhang mit einem Schweißdraht 9 bzw. Schweißdraht 30 erläutert. Selbstverständlich ist die Erfindung aber auch uneingeschränkt auf andere beweglich gelagerte Schweißmedien anwendbar, beispielsweise auf Schweißelektroden, wenngleich dies auf den ersten Blick praxisfremd erscheint.

Weiterhin wird angemerkt, dass der Schweißroboter 26 auch eine andere Bauform haben kann. Beispielsweise kann dieser als Portalroboter ausgeführt sein. Anstelle der Rollen 32 kann ein anderer Antrieb für den Schweißdraht 30 vorgesehen sein. Desgleichen kann anstelle eines Amperemeters 35 ein Komparator oder eine andere Auswerteschaltung zur Detektion eines Stromflusses eingesetzt werden. Die Spannungs-/Stromquelle 34 kann zudem eine beliebige Spannungs-/Strom-Charakteristik haben. Vorteilhaft wird die Spannungs-/Stromquelle 34 durch die auch zum Schweissen verwendetet Schweißstrom-/spannungsquelle 1 gebildet, welche zur Erzeugung der Prüfspannung entsprechend eingestellt wird. Aber auch eine gesonderte Spannungs-/Stromquelle 34 ist selbstverständlich einsetzbar.

Wesentlich ist, dass zum Teachen eines Schweißroboters, bei dem über einen manuell gesteuerten Bewegungsablauf eine Position festgelegt und gespeichert wird, folgende Schritte/Abläufe durchgeführt werden:
- Herausfahren eines beweglich gelagerten Schweißdrahts 30/Schweißdrahts 9 aus einem Schweißkopf 29/Schweißbrenner 7 auf eine vorgebbare Länge und
- Bewegen des Schweißkopfes 29/Schweißbrenners 7 zu einer Position an einem Werkstück 14, 31 bei deaktivierter Stromversorgung des Schweißkopfes 29/Schweißbrenners 7 über das Schweißgerät 1, und dass nach dem Positionieren an der Position ein sogenannter Wire-Touch-Sensing-Prozess im Schweißgerät gestartet wird, bei dem zwischen dem Schweißdraht 30/Schweißdraht 9 und dem Werkstück 14, 31 eine Prüfspannung angelegt wird und anschließend der manuelle Positioniervorgang mit dem Schweißkopf 29/Schweißbrenner 7 fortgeführt wird, wobei bei Detektion eines Stromflusses zwischen Schweißdraht 9, 30 und Werkstück 14, 31 der Schweißdraht 9, 30 zum Unterbrechen des Stromflusses zurückgefahren wird. Bevorzugt wird nach dem Unterbrechen der Schweißdraht 9, 30 wieder zum Werkstück 14, 31 oder auf die vorgebbare Länge 1 bewegt. Beim Verstellen des Schweißkopfes 29/ Schweißbrenners 7 wird der Schweißdraht 9, 30 solange die Länge 1 nicht erreicht ist wiederholend zum Werkstück 14, 31 und vom Werkstück 14, 31 zurück bewegt, es wird also die Kontur des Werkstücks 14, 31 abgetastet.

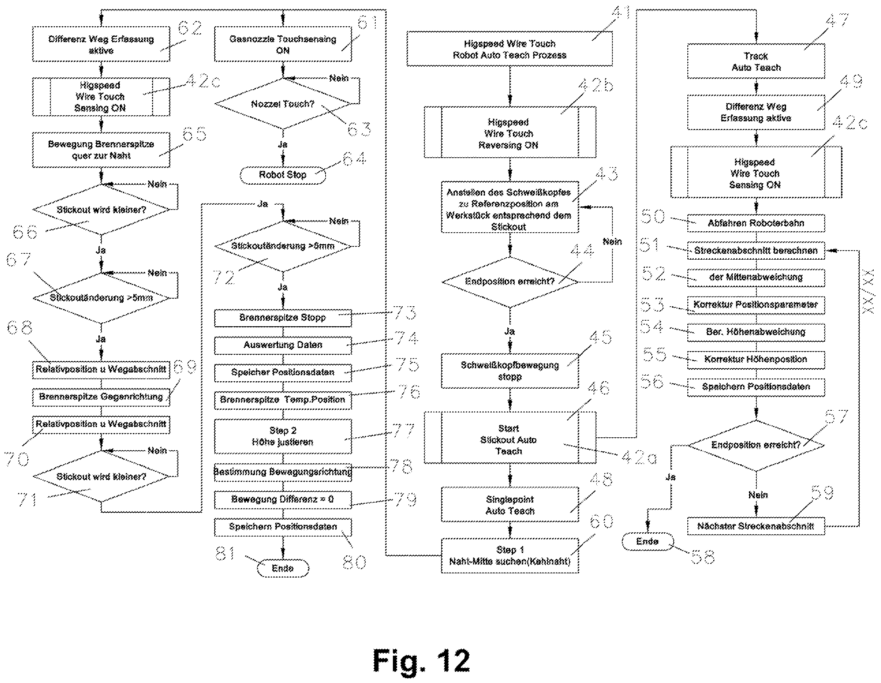

In den Fig. 12 bis 13 ist nun ein Ablauf für die automatische Ermittlung einer Mittelposition einer Schweißraupe in Form eines Flussdiagramms vereinfacht dargestellt. Die in den einzelnen Funktionsblöcken angegebenen Abläufe, Steuervorgänge, Funktionen usw. dienen zur Auslegung/Programmierung für den Fachmann, wobei die Programmierung entsprechend des eingesetzten Schweißroboters 26 und des Schweißgerätes 1 unterschiedlich erfolgt und somit nicht im Detail beschrieben wird. Der Fachmann ist in der Lage, aus den vorgegebenen Funktionsblöcken einzelne zusammenhängende Programmabläufe zu erstellen, sodass der Schweißroboter 26 und das Schweißgerät 1 entsprechende Abläufe/Aufgaben durchführen.

Damit jedoch so ein automatischer Ablauf durchgeführt werden kann, ist es von Vorteil, wenn vor Beginn einige Parameter vom Benutzer eingestellt/vorgegeben werden. Hierzu kann er auf dem Schweißgerät 1 und/oder dem Schweißroboter 26 entsprechende Eingabemenüs aufrufen. Insbesondere ist es vorteilhaft, wenn die Nahtart, also z.B. eine Kehlnaht, Stumpfnaht, Überlappnaht usw. ausgewählt/eingestellt wird, da die Abläufe für die verschiedensten Nahttypen angepasst sind. Anschließend wird ein Ablauf für eine Kehlnaht beschrieben, auf deren Basis vom Fachmann es möglich ist, die weiteren Abläufe für die weiteren Nahtarten erstellen zu können bzw. dies anpassen zu können.

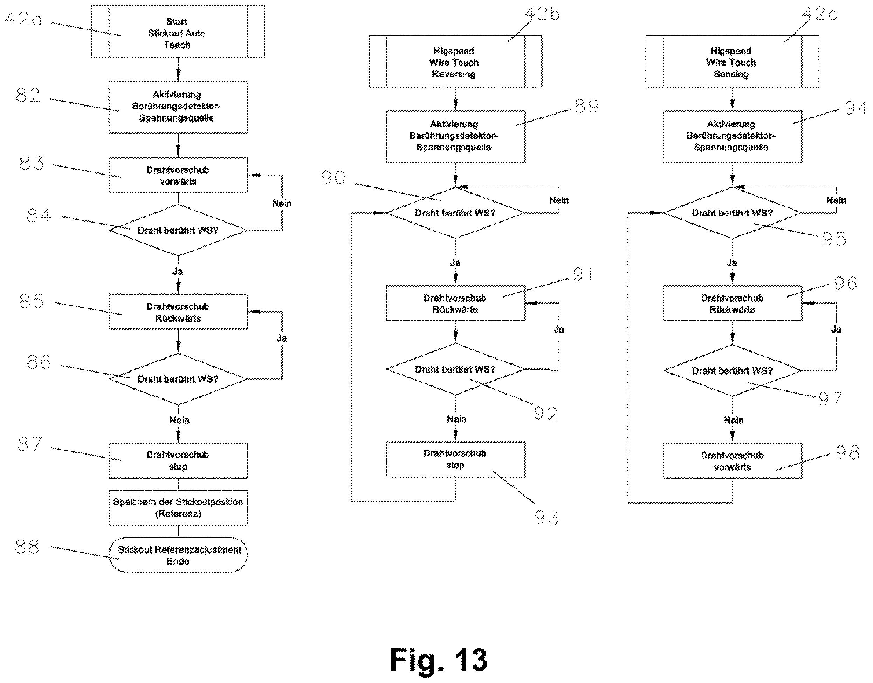

Am Beginn 41 wird der Schweißbrenner 7 über den Schweißroboter 26 am Werkstück 14 positioniert. Dies kann vom Benutzer aus manuell erfolgen oder automatisch über die Programmierung des Schweißroboters 26, wobei bevorzugt zuerst eine manuelle Grob-Positionierung des Schweißbrenners 7 vorgenommen wird. Anschließend wird ein "Wire Teach Prozess" 42 gestartet, bei dem ein Unterprogramm gemäß Fig. 13 aufgerufen wird, welches nachträglich noch detaillierter beschrieben wird. Erfolgte die Grob-Positionierung des Schweißbrenners 7 manuell, so sollte auch dieser Prozess manuell vom Benutzer gestartet werden, wogegen bei einer automatisch vorprogrammierten Grob-Positionierung auch ein automatisches Starten dieses Vorganges möglich ist.

Nachfolgend kann eine Korrektur der Schweißbrennerposition 43 und/oder eine Winkelanpassung aufgrund eines ev. definierten Stickout 1 von diesem vorgenommen werden, worauf eine Abfrageautomatik 44 folgt, die eine Schleife hervorruft, sodass solange korrigiert wird, bis die richtige Position erreicht ist. Entspricht die eingestellte Position einer vorgegeben/vorprogrammierten Position oder gibt der Benutzer diese manuell frei, so wird die Abfrageautomatik 44 mit "Ja" beantwortet, worauf die Schweißkopfbewegung 45 gestoppt wird. Anschließend wird ein Untermenü "Stickout Auto Teach" 46 aufgerufen, worin der Benutzer entscheiden muss, wie der Vorgang weitergeführt wird. Dabei gibt es zwei Möglichkeiten; "Track Auto Teach" 47 oder "Singlepoint Auto Teach" 48. Hierbei ist es möglich, dass der Ablauf zur Abfrage unterbrochen wird und der Benutzer aufgefordert wird, eine entsprechende Auswahl vorzunehmen, oder dass dies bereits vor dem Start vom Benutzer eingegeben wurde.

Hat sich der Benutzer für "Track Auto Teach" 47 entschieden, so wird nun mit dem Programmablauf auf der rechten Seite fortgefahren. Dabei wird die "Differenz Weg Erfassung" 49 aktiviert, worauf das Unterprogramm "Highspeed Wire Touch" 42 abermals gestartet/aufgerufen wird. Parallel dazu, werden die Funktionen 50 bis 56, aufeinanderfolgend abgearbeitet:
- Abfahren einer Roboterbahn mit vordefiniertem Start und Endpunkt, wobei quer zur Naht eine vordefinierte Pendelbewegung ausgeführt wird 50;
- in vordefinierten Streckenabschnitten erfolgt die Berechnung 51, bei der
- die Mittelwertabweichung aus der Differenz der Relativpositionen des Drahtendes an dem Wendepunkten einer Pendelperiode 52 ermittelt wird;
- Korrektur der Positionsparamters - Brennerspitze wird mittig positioniert 53;
- Berechnung der Höhenabweichung aus der Differenz von aktueller Drahtlänge und Stickoutreferenz in Mittenposition 54;
- Korrektur der Höhenposition 55;
- Speichern der korrigierten Positionsdaten 56.

Nachdem alle Abläufe durchlaufen wurden, erfolgt ein Vergleich "Endposition erreicht" 57 ja/nein. Ist die Endposition erreicht, wird der Ablauf durch Auswahl der Funktion "Ende" 58 beendet, wogegen bei Nicht-Erreichen, die Funktion "Nächster Streckenabschnitt" 59 aufgerufen wird und anschließend zur Funktion 51 zurück gesprungen wird. Dieser Vorgang wird solange wiederholt, bis alle Streckenabschnitte und somit die Endposition erreicht ist.

Hat der Benutzer beim Unterprogramm "Start Stickout Auto Teach" 46 jedoch die Funktion "Singlepoint Auto Teach" 48 gewählt, so würde der Funktionsablauf der linken Spalte aufgerufen und abgearbeitet. Bei dieser Funktion wird die Nahtmitte-Ermittlung/-Berechnung automatisch durchgeführt, wobei jedoch die Steuerung des Bewegungsablaufes, also Links oder Rechts, Vor oder Zurück des Schweißbrenners 7 manuell, wie auch in den zuvor beschriebenen Figuren, vom Benutzer durchgeführt wird, wogegen beim vorhergehend beschriebenen Ablauf des "Track Auto Teach" 47 die Brennerbewegungssteuerung automatisch vom Schweißroboter 26 aus erfolgte.

Dabei wird die Funktion 60 "Step 1 Naht-Mitte suchen (Kehlnaht)" aufgerufen, an die sich die Funktionen "Gasnozzle Touchsensing ON" 61 und "Differenz Weg Erfassung aktiv" 62 anschließen, wenn diese in der Grundeinstellung ausgewählt wurden. Bei der Funktion 61, wird eine Abfrageroutine "Nozzle Touch" 63 gestartet, bei der die Berührung der Gasdüse mit dem Werkstück 14 überwacht wird, sodass der Benutzer den Schweißbrenner 7 manuell verstellen kann, wobei parallel dazu die Funktion 62 abgearbeitet wird, wie später beschrieben wird. Berührt die Gasdüse 7 das Werkstück 14, so erkennt dies die Abfrage und springt auf die Funktion "Robot Stop" 64, wogegen nach einer Bewegung des Schweißbrenners 7, bei der kein Kontakt erfolgt, die Schleife zurück zur Abfrage wiederholt wird. Diese Funktion erfüllt somit die Funktion einer Kollisionserkennung, läuft im Hintergrund parallel zu anderen Funktionen und kann durch den Benutzer beliebig ein oder aus geschaltet werden.

Bei Funktion 62, sprich "Differenz Weg Erfassung", wird das Unterprogramm "Highspeed Wire Touch Sensing" 42 aktiviert, worauf der Benutzer den Schweißbrenner 7 bewegen kann, und dies überwacht wird.

Da bei einem manuellen Bewegungsablauf der Schweißroboter 26 und/oder das Schweißgerät 1 und/oder die Steuerung zuerst die Richtung erkennen muss, in welche der Benutzer steuert, müssen einige Überwachungs-/Auswertefunktionen durchlaufen werden.

Hierzu werden die Funktionen 65 bis 73 durchlaufen, bei denen die Stickoutlänge 1 überprüft wird, sodass aufgrund deren Veränderung auf die Richtung der Roboterbewegung rückgeschlossen werden kann, wobei die einzelnen Funktionen folgende Aufgaben beinhalten:
- "Bewegen der Brennerspitze in Beliebiger Richtung quer zur Naht" 65
- "Stickout wird kleiner" 66, wenn ja
- "Stickoutveränderung > 5mm" 67, wenn ja
- "Bewegung Brennerspitze stopp" 68
- "Aktiviere Speichern der Relativposition Draht und Positionsdaten Roboter in definierten Wegabschnitt der Roboterbahn" 69
- Bewegung der Brennerspitze in Gegenrichtung quer zur Naht 70
- "Stickout wird kleiner" 71, wenn ja
- "Stickoutveränderung > 5mm" 72, wenn ja
- "Bewegung Brennerspitze Stopp" 73

Durch diesen Ablauf wurde der Schweißbrenner 7 von einem Ausgangspunkt einmal quer über die später durchzuführende Naht bewegt, wobei hierzu die Stickoutlänge 1 überwacht und gespeichert wurde.

Nachdem ein derartiger Bewegungsablauf durchgeführt wurde, müssen die Daten ausgewertet werden, wozu die Funktion 74 "Auswertung der Daten" nach max. Drahtlänge (=Mitte Naht) - ausgeführt wird. Dazu wird die Funktion 75 "Temporäres Speichern" der zur Mitte Naht gehörigen Positionsdaten als Programmpunkt im Roboter - und Durchführen der Funktion 76 "Bewegung der Brennerspitze zu Temporär gespeicherter Position" ausgeführt. Somit ist der Schweißbrenner 7 im Mittel/Zentrum der geplanten Kehlnaht positioniert, sodass nunmehr die richtige Höhe ermittelt werden kann, wozu die Funktion "Step 2 Höhe jutstieren" 77 aufgerufen wird. Dabei werden nun die Funktionen 78 bis 80 ausgeführt, worauf der Brenner in der richtigen Höhe und mittig positioniert ist und das Programm mit Ende 81 beendet wird. Die Funktionen 78 bis 80 beinhalten:
- Bestimmung der erforderlichen Bewegungsrichtung der Brennerspitze aus der Differenz von aktueller Drahtlänge und Stickoutreferenz 78;
- Bewegung in entsprechender Richtung bis Differenz = 0;
- Endgültiges Speichern der Positionsdaten als Roboter Programmpunkt

Somit ist eine automatischer Mittelpunkterkennung abgeschlossen und die entsprechende Position gespeichert, worauf zur nächsten Position weiter gegangen werden kann und wiederum ein neue Position in einem anderen Abschnitt ermittelt werden kann.

Damit jedoch der Schweißdraht 9 beim Berühren mit dem Werkstück 14 nicht verbogen wird, ist es notwendig das der so genannte "Wire-Touch-Sensing-Prozess", bei dem die Berührung erkannt wird und der Schweißdraht 9 zurück gezogen wird, wie in den zuvor beschriebenen Figuren erläutert, aktiviert wird. Dies wird mit dem Unterprogramm 42a, 42b, 42c Wire-Touch-Sensing-Prozess, wie es im Detail in Fig. 13 dargestellt ist, durchgeführt. Nach Aktivieren dieses Programmteils sind die einzelnen Funktionen zumindest teilweise parallel zu den in Fig. 12 beschrieben Abläufe aktiv. Üblicherweise kann der Benutzer hierzu entsprechende Voreinstellungen speichern bzw. vor jedem Teaching-Vorgang neu eingeben.

Nach dem Aufruf der Funktion "Start Stickout Auto Teach" 42a wird die "Aktivierung Berührungsdetektor Spannungsquelle" 82 aufgerufen und die Funktion "Drahtvorschub vorwärts" 83 gestartet, wodurch die Stromquelle 34 an den Schweißdraht 9 und das Werkstück 14 angelegt wird und der Schweißdraht 9 Richtung Werkstück 14 gefördert wird. Zur Erkennung eines Kurzschlusses wird anschließend eine Abfrage 84 "Draht berührt Werkstück" aktiviert, wobei wenn kein Kurzschluss erfolgt ist, wieder auf die Funktion 83 gesprungen wird, d.h., dass der Schweißdraht 9 bis zum Berühren mit dem Werkstück 14 gefördert wird, da ansonst diese Schleifen nicht verlassen wird. Berührt der Schweißdraht 9 das Werkstück, also ergibt die Abfrage 84 ein "Ja", so wird zur Funktion 85 "Drahtvorschub rückwärts" gesprungen, sodass nunmehr der Schweißdraht 9 vom Werkstück 14 zum Aufbrechen des Kurzschlusses zurück gezogen wird. Dies wird wiederum über eine Abfrage 86 "Draht berührt Werkstück" erkannt, wobei bei "Nein" die Funktion "Drahtvorschub Stopp" und eine "Speicherung der Stickoutposition (Referenz)" 87 aufgerufen wird und das Untermenü 42a mit der Funktion 88 "Stickout Referenzadjustment Ende" beendet wird.

Wird hingegen beim Hauptprogramm das Untermenü 42b "Highspeed Wire Touch Reversing" aufgerufen, so wird wiederum ein ähnlicher Ablauf wie zuvor für das Untermenü 42a gestartet. Nunmehr wird wiederum mit der Funktion 89 "Aktivierung Berührungsdetektor Spannungsquelle" die Stromquelle 34 aktiviert. Daraufhin wird sofort eine Abfrage 90 "Draht berührt Werkstück" gestartet, sodass beim manuellen Verstellen des Schweißbrenners 7 durch den Benutzer eine Berührung erkannt werden kann. Liegt keine Berührung vor, so wird wieder zurück auf die Abfrage gesprungen, wogegen bei einer Berührung, also bei "Ja", die Funktion 91 "Drahtvorschub Rückwärts" aufgerufen und gestartet wird, sodass der Schweißdraht 9 sofort vom Werkstück 14 weg gefördert wird. Damit das Aufheben des Kurzschlusses oder besser gesagt, das Abheben des Schweißdrahtes 9 vom Werkstück 14, erkannt wird, wird wiederum eine Abfrage 92 gestartet. Anschließend wird die Funktion 93 "Drahtvorschub stop" zum Beenden der Rückwärtsbewegung des Schweißdrahtes 9 durchgeführt, worauf wiederum mit der Abfrage 90 fortgefahren wird, sodass sich ein entsprechender Kreislauf ergibt und bei jedem Berühren der Schweißdraht 7 zurückgezogen wird und somit nicht verbogen werden kann. Durch das Zurückspringen zur Abfrage 90 wird gewährleistet, dass beim weiteren manuellen Verstellen des Schweißbrenners 7 und einer abermaligen Berührung diese wieder erkannt und behoben wird.

Wird hingegen das Untermenü 42c aufgerufen, so wird ein Sensing-Prozess gestartet, wo der Schweißdraht 9 über die Kontur des Werkstückes 14 geführt werden kann, also der Schweißdraht 9 immer wieder auf das Werkstück 14 zum Berühren hinbewegt wird. Die Erkennung wird mit der Funktion 94 "Aktivierung Berührungsdetektor Spannungsquelle,, gestartet, da dadurch die Stromquelle 34 an das Werkstück 14 und den Schweißdraht 9 angelegt wird. Daraufhin erfolgt eine Abrage 95 "Draht berührt Werkstück", bei der bei einem Berühren, also einem "Ja" die Funktion 96 "Drahtvorschub rückwärts" zum Rückwärtsfördern und Aufheben der Berührung aktiviert wird. Die wird wiederum mit einer Abfrage 97 "Draht berührt Werkstück" überwacht, worauf beim Abheben des Schweißdrahtes 9 vom Werkstück 14, also bei "Nein", nunmehr die Funktion 98 "Drahtvorschub vorwärts" aufgerufen wird und somit der Schweißdraht 9 wieder auf das Werkstück 14 hin bewegt wird. Damit der neuerliche Kurzschluss bzw. das Berühren erkannt wird, wird von der Funktion 98 auf die Abfrage 95 gesprungen, sodass sich ein geschlossener Kreislauf ergibt.

Weiters ist es für die Positionierung des Schweißdrahtes 9 möglich, dass eine Referenzierung, beispielsweise nach 5 Zyklen, durchgeführt wird, sodass ein ev. auftretender Schlupf des Schweißdrahtes korrigiert werden kann. Hierzu kann beispielsweise der Schweißdraht 2 cm ausgefahren werden, worauf der Benutzer aufgefordert wird, diesen am Kontaktrohr abzuschneiden, sodass nun ein definiert Punkt gegeben ist.

Die Ausführungsbeispiele zeigen mögliche Ausführungsvarianten eines erfindungsgemäßen Schweißroboters 26, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Weiterhin eignet sich die beschriebene Erfindung nicht nur für das Teach-In-Verfahren, sondern auch bei anderen Programmierverfahren, z.B. beim Playback-Verfahren, bei der Offline-Programmierung, bei der CAD gestützten Programmierung und bei der Akustischen Programmierung unterstützen. Die Erfindung ist dabei auf alle Arten von Schweißrobotern und Schweißanlagen anwendbar. Für Schweißroboter offenbarte Varianten und deren Vorteile beziehen sich daher auch auf Schweißanlagen und umgekehrt.

Der Ordnung halber sei abschließend darauf hingewiesen, dass zum besseren Verständnis des Aufbaus des Schweißroboters 26 dieser bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | | | |
|---|---|---|---|
| 1 | Schweißgerät | b | Breite der Schweißnaht |
| 2 | Stromquelle | | |
| 3 | Leistungsteil | | |
| 4 | Steuervorrichtung | | |
| | 5 Gas | | |
| | | | |
| 6 | Gasspeicher | | |
| 7 | Schweißbrenner | | |
| 8 | Drahtvorschubgerät | | |
| 9 | Schweißdraht | | |
| 10 | Vorratstrommel | | |
| | | | |
| 11 | Gehäuse | | |
| 12 | Fahrwagen | | |
| 13 | Lichtbogen | | |
| 14 | Werkstück | | |
| 15 | Kühlgerät | | |
| | | | |
| 16 | Wasserbehälter | | |
| 17 | Füllstandsanzeige | | |
| 18 | Ein- u/o Ausgabevorrichtung | | |
| 19 | Schweibrenner-Ein-u/o Ausgabevorrichtung | | |
| 20 | Hitzeschutzschild | | |
| | | | |
| 21 | Schlauchpaket | | |
| 22 | Knickschutz | | |
| 23 | Schleifschutz | | |
| 24 | Optionsträger | | |
| 25 | Haltevorrichtung | | |
| | | | |
| 26 | Schweißroboter | | |
| 27 | Roboterbasis | | |
| 28 | Roboterarm | | |
| 29 | Schweißkopf | | |
| 30 | Schweißdraht | | |
| | | | |
| 31 | Werkstück | | |
| 31a | erster Werkstückteil | | |
| 31b | zweiter Werkstückteil | | |
| 32 | Rolle | | |
| 33 | zweite Antriebssteuerung | | |
| | | | |
| 34 | Spannungs-/Stromquelle | | |
| 35 | Amperemeter | | |
| 36 | Schalter | | |
| 37 | Lichtbogen | | |
| l | Länge, um welche das Schweißmedium über den Schweißkopf hinausragt | | |

## Patentansprüche

1. Verfahren zum Teachen eines Schweißroboters (26), bei dem über einen manuell durchgeführten Positioniervorgang eine Position festgelegt und gespeichert wird, umfassend die Schritte:
- Herausfahren eines beweglich gelagerten Schweißdrahtes (9, 30), aus einem Schweißkopf (29), insbesondere eines Schweißbrenners (7), auf eine Länge (1) und
- Bewegen des Schweißkopfes (29) zu einer Position an einem Werkstück (14, 31), bevorzugt bei deaktivierter Stromversorgung des Schweißkopfes (29),
**dadurch gekennzeichnet, dass**
- nach dem Positionieren an der Position ein sogenannter Wire-Touch-Sensing-Prozess im Schweißgerät gestartet wird, bei dem
- zwischen dem Schweißdraht (9, 30) und dem Werkstück (14, 31) eine Prüfspannung angelegt wird und
- anschließend der manuelle Positioniervorgang mit dem Schweißkopf (29) fortgeführt wird,
- **dadurch gekennzeichnet, dass** bei Detektion eines Stromflusses zwischen dem Schweißdraht (9, 30) und dem Werkstück (14, 31) beziehungsweise einem Einbruch der Prüfspannung der Schweißdraht (9, 30) zum Unterbrechen des Stromflusses zurückgefahren wird.

2. Verfahren nach Anspruch 1, wobei der Schweißdraht (9, 30) nach dem Unterbrechen wieder zum Werkstück (14, 31) oder auf die vorgebbare Länge (1) bewegt wird.

3. Verfahren nach Anspruch 1 oder 2, wobei der Schweißdraht (9, 30) beim Verstellen des Schweißkopfes (29) wiederholend zum Werkstück (14, 31) und vom Werkstück (14, 31) zurück bewegt wird, also die Kontur des Werkstücks (14, 31) abgetastet wird, solange die Länge (1) nicht erreicht ist.

4. Verfahren nach einem der vorhergehenden Ansprüche, wobei die Rückfördergeschwindigkeit des Schweißdrahtes (9, 30) derart gewählt wird, dass diese stets höher als die Geschwindigkeit der Vorwärtsbewegung des manuell gesteuerten Schweißbrenners (7) ist.

5. Verfahren nach einem der vorhergehenden Ansprüche, wobei die Stromquelle (34) die Energiemenge derart beschränkt, dass bei einem Kurzschluss keine Aufschmelzung des Schweißdrahtes (9, 30) und des Werkstückes (14, 31) zustande kommt, jedoch die Kontaktierung der beiden schnellst möglich erfasst wird, wobei jedoch die für den eigentlichen Schweißprozess weiteren Überwachungs-, Steuer- und Regelfunktionen, wie beispielsweise die Kurzschlussauflösung, die Drahtförderung, die Schutzgasversorgung, der Kühlkreislauf usw., des Schweißgerätes (1) deaktiviert bleiben.

6. Verfahren nach einem der vorhergehenden Ansprüche, wobei der Abstand des Schweißkopfs (29) vom Werkstück (14, 31) später beim Schweißen dem Abstand entspricht, wenn der um die vorgebbare Länge (1) herausgefahrene Schweißdraht (9, 30) das Werkstück (31) berührt.

7. Verfahren nach einem der vorhergehenden Ansprüche, wobei der Schweißdraht (9, 30) nach dem Starten des Wire-Touch-Sensing-Prozesses so lange herausgefahren wird, bis ein Stromfluss detektiert wird.

8. Verfahren < zum Einlernen/Prüfen eines Bewegungsablaufs des Schweißroboters (26) > nach Anspruch 7, umfassend die folgenden Schritte < - > :
a) Anlegen der Prüfspannung zwischen dem Schweißdraht (9, 30) und dem Werkstück (14, 31) durch Aktiveren des Wire-Touch-Sensing-Porzesses,
b) Bewegen des Schweißkopfes (29) entlang des genannten Bewegungsablaufs an dem Werkstück (14, 31),
c) Herausfahren des beweglich gelagerten Schweißdrahts (9, 30) aus dem Schweißkopf (29) bis in dem Stromkreis, in welchem der Schweißdraht (9, 30) und das Werkstück (14, 31) liegt, ein Stromfluss detektiert wird, und
d) Zurückfahren des Schweißdrahts (9, 30) um eine vorgebbare Rückzugsstrecke und wiederholen der Schritte a) bis d).

9. Verfahren nach einem der Ansprüche 1 bis 8 wobei die Länge (1), um welche der Schweißdraht (9, 30) aus dem Schweißkopf (29) heraus- und/oder zurückgefahren wird gemessen wird, insbesondere manuell gemessen wird, oder über eine Ein- und/oder Ausgabevorrichtung eingestellt oder durch Berühren mit dem Werkstück (14, 31) definiert wird.

10. Verfahren nach einem der Ansprüche 1 bis 9, wobei die Prüfspannung beziehungsweise der daraus resultierende Stromfluss kleiner als eine zur Ausbildung eines Lichtbogens (37) erforderliche Spannung / ein zur Ausbildung eines Lichtbogens (37) erforderlicher Strom bemessen sind.

11. Verfahren nach einem der Ansprüche 1 bis 10 wobei die Prüfspannung beziehungsweise der daraus resultierende Stromfluss kleiner als eine zum Abschmelzen des Schweißdrahts (9, 30) erforderliche Spannung / ein zum Abschmelzen des Schweißdrahts (9, 30) erforderlicher Strom bemessen sind.

12. Verfahren nach Anspruch 11, wobei die Prüfspannung beziehungsweise der daraus resultierende Stromfluss größer als eine zur Ausbildung eines Lichtbogens (37) erforderliche Spannung / ein zur Ausbildung eines Lichtbogens (37) erforderlicher Strom, jedoch kleiner als eine zum Abschmelzen des Schweißdrahts (9, 30) erforderliche Spannung / ein zum Abschmelzen des Schweißdrahts (9, 30) erforderlicher Strom bemessen sind.

13. Verfahren nach einem der Ansprüche 1 bis 12, wobei
- der Schweißkopf (29) im Bereich einer fertigen oder herzustellenden Schweißnaht quer zu deren Verlauf bewegt wird,
- die Position des Schweißkopfes (29) und optional des Schweißdrahts (9, 30) gespeichert beziehungsweise ermittelt wird, wenn ein Stromfluss in dem genannten Stromkreis beziehungsweise ein Einbruch der Prüfspannung detektiert wird, und
- aus mehreren gespeicherten beziehungsweise ermittelten Positionen die Breite (b) / die Höhe der Schweißnaht und/oder die Lage des Schweißkopfes (29) beziehungsweise des Schweißdrahts (9, 30) relativ zur Schweißnaht ermittelt wird.

14. Verfahren nach einem der Ansprüche 1 bis 13, wobei bei der Auswertung der Schweißdrahtförderung das längste Stickout (1), welchem die Mittelposition der Schweißnaht entspricht, ermittelt wird.

15. Verfahren nach einem der Ansprüche 1 bis 14, wobei ein Alarm ausgelöst wird, wenn ein Stromfluss beziehungsweise ein Spannungseinbruch nicht detektiert wird, obwohl dies aus der Position des Schweißkopfes (29) beziehungsweise des Schweißdrahts (9, 30) und den Werkstückkoordinaten zu erwarten wäre.

16. Verfahren nach einem der Ansprüche 1 bis 15, wobei :
- zwischen einem elektrisch leitenden Teil des Schweißkopfes (29) und dem Werkstück (14, 31) eine Prüfspannung angelegt wird und
- der Schweißkopf (29) angehalten oder zurückgefahren wird, wenn in einem Stromkreis, in welchem der genannte leitende Teil und das Werkstück (14, 31) liegt, ein Stromfluss beziehungsweis ein Einbruch der Prüfspannung detektiert wird.

17. Steuerung für das Teachen eines Schweißroboters, bei dem über einen manuell durchgeführten Positioniervorgang eine Position festgelegt und gespeichert wird, umfassend:
- einen ersten Ausgang zur Ansteuerung eines ersten Antriebssystems, welches zum Bewegen des Schweißkopfes (29) zu einer Position an einem Werkstück (14, 31), bevorzugt bei deaktivierter Stromversorgung des Schweißkopfes (29), vorbereitet ist,
- einen zweiten Ausgang zur Ansteuerung eines zweiten Antriebssystems (32), welches zum Herausfahren eines beweglich gelagerten Schweißdrahts (9, 30) aus einem Schweißkopf (29), insbesondere des Schweißbrenners (7), auf eine Länge (1) vorbereitet ist, wobei
- die Steuerung eine Detektionseinrichtung (35) zum Detektieren eines Stromflusses in einem Stromkreis und Mittel zum Starten eines sogenannten Wire-Touch-Sensing-Prozess nach dem Positionieren an der Position umfasst, wobei der Wire-Touch-Sensing-Prozess dazu eingerichtet ist, zwischen dem Schweißdraht (9, 30) und dem Werkstück (14, 31) eine Prüfspannung anzulegen, und anschließend den manuellen Positioniervorgang mit dem Schweißkopf fortzuführen und **dadurch gekennzeichnet, dass**
- die Steuerung dazu eingerichtet ist, bei Detektion eines Stromflusses zwischen dem Schweißdraht (9, 30) und dem Werkstück (14, 31) beziehungsweise eines Einbruchs der Prüfspannung einen Befehl über den zweiten Ausgang auszugeben, welcher das Zurückfahren des Schweißdrahts (9, 30) zum Unterbrechen des Stromflusses bewirkt.

18. Schweißanlage, umfassend ein Schweißgerät (1) und einen Schweißroboter (26), die über Leitungen, insbesondere ein Bussystem, miteinander gekoppelt sind, und einen am Schweißroboter (26), insbesondere an der letzten Achse des Schweißroboters, befestigten Schweißbrenner (7), wobei der Schweißbrenner (7) vom Schweißroboter (26) entlang einer vorgegeben Bahn geführt wird und die Steuerung-/Regelung des dabei durchgeführten Schweißprozesses vom Schweißgerät (1) aus erfolgt,
**dadurch gekennzeichnet, dass**
eine Steuerung nach Anspruch 17 die Anlage derart steuert, dass vor dem Durchführen eines Schweißprozesses ein manuell gesteuerter Teaching-Vorgang, bei dem über einen manuell betätigten Bewegungsablauf eine Position festgelegt und gespeichert wird, durchgeführt wird, der folgende Schritte umfasst:
- Herausfahren eines beweglich gelagerten Schweißdrahts (9, 30) aus einem Schweißkopf (29) auf eine vorgebbare Länge (1) und
- Bewegen des Schweißkopfes (29) zu einer Position an einem Werkstück (14, 31) bei deaktivierter Stromversorgung des Schweißkopfes (29),
- Starten eines Teaching-Prozesses im Schweißgerät (1) nach dem Positionieren an der Position, bei dem
- zwischen dem Schweißdraht (9, 30) und dem Werkstück (14, 31) eine Prüfspannung angelegt wird und
- anschließend der manuelle Bewegungsablauf mit dem Schweißkopf (29) durchgeführt wird,
- wobei bei Detektion eines Stromflusses zwischen Schweißdraht (9, 30) und Werkstück (14, 31) beziehungsweise bei Einbruch der Prüfspannung der Schweißdraht (9, 30) zum Lösen des Stromflusses zurückgefahren wird und
- nach dem Lösen der Schweißdraht (9, 30) zum Werkstück (14, 31) oder auf die vorgebbare Länge (1) bewegt wird, und dass
- der Schweißdraht (9, 30) solange die Länge (1) nicht erreicht ist wiederholend zum Werkstück (14, 31) und vom Werkstück (14, 31) zurück entlang der Kontur des Werkstücks (14, 31) bewegt wird.

19. Schweißanlage nach Anspruch 18, **dadurch gekennzeichnet, dass** eine automatische Ermittlung der Mittelposition einer Schweißraupe durchgeführt wird, bei der vom Schweißroboter (26) der Schweißbrenner (7) quer zur Schweißraupe bewegt wird.

20. Schweißanlage nach Anspruch 19, **dadurch gekennzeichnet, dass** der Schweißdraht (9, 30) bei der Bewegung des Schweißbrenners (7) quer zur Schweißraupe, insbesondere quer zu einer Kehlnaht, ständig auf das Werkstück (14, 31) zu und zurück bewegt wird, und anschließend eine Auswertung der Schweißdrahtförderung durchgeführt wird.

21. Verfahren zum automatischen Positionieren eines Schweißkopfes (29) an einem Werkstuck (14, 31), bei dem eine vorprogrammierte Position angefahren wird, wobei:
- nach dem Positionieren ein sogenannter Wire-Touch-Sensing-Prozess im Schweißgerät gestartet wird, bei dem
- zwischen dem Schweißdraht (9, 30) und dem Werkstück (14, 31) eine Prüfspannung angelegt wird und der Schweißdraht (9, 30) in Richtung des Werkstückes (14, 31) gefördert wird und bei Detektion eines Stromflusses zwischen Schweißdraht (9, 30) und Werkstück (14, 31) der Schweißdraht (9, 30) zum Unterbrechen des Stromflusses zurückgefahren wird, und dass
- anschließend eine vorprogrammierte Bahn abgefahren wird, die vorzugsweise quer zur geplanten Schweißnahtachse verläuft, und dass
- beim Verstellen des Schweißkopfes (29) der Schweißdraht (9, 30) wiederholend zum Werkstück (14, 31) und vom Werkstück (14, 31) zurück bewegt wird, also die Kontur des Werkstücks (14, 31) abgetastet wird, und aus den Werten der geförderten Drahtlängen eine definierte Position, insbesondere eine Mittelposition, ermittelt wird.

22. Verfahren nach Anspruch 21, **dadurch gekennzeichnet, dass** ein Verfahren nach einem oder mehreren der Ansprüche 1 bis 16 und Steuerung nach Anspruch 17, sowie die Schweißanlage nach einem oder mehreren der Ansprüche 18 bis 20 eingesetzt werden.

## Claims

1. A method for teaching a welding robot (26), in which a position is determined and stored by way of a manually implemented positioning process, comprising the steps:
- feeding a movably mounted welding wire (9, 30) out of a welding head (29), in particular a welding torch (7), to a length (1) and
- moving the welding head (29) to a position at a workpiece (14, 31), preferably when the power supply of the welding head (29) is deactivated,
**characterized in that**
- after positioning at the position, a so-called wire-touch sensing process is started in the welding device, wherein
- a test voltage is applied between the welding wire (9, 30) and the workpiece (14, 31) and
- subsequently, the manual positioning process is continued with the welding head (29),
- **characterized in that**
when a current flow between the welding wire (9, 30) and the workpiece (14, 31) or a drop of the test voltage is detected, the welding wire (9, 30) is retracted to interrupt the current flow.

2. The method according to claim 1, wherein after the interruption, the welding wire (9, 30) is moved again to the workpiece (14, 31) or to the predeterminable length (1).

3. The method according to claim 1 or 2, wherein when adjusting the welding head (29), the welding wire (9, 30) is repeatedly moved to the workpiece (14, 31) and back from the workpiece (14, 31), thus, the contour of the workpiece (14, 31) is sensed, as long as the length (1) has not been achieved.

4. The method according to any one of the preceding claims, wherein the speed of feeding back the welding wire (9, 30) is selected as to be always higher than the speed of the forward motion of the manually controlled welding torch (7).

5. The method according to any one of the preceding claims, wherein the current source (34) limits the amount of power in such a way that a short-circuit does not result in a melting of the welding wire (9, 30) and the workpiece (14, 31), but the contacting of both of them is recognized as rapidly as possible, with however the further monitoring, open-loop and closed-loop functions for the actual welding process, such as the release of short-circuit, the wire feed, the protective gas supply, the cooling circuit, etc. of the welding device (1) remaining deactivated.

6. The method according to any one of the preceding claims, wherein the distance between the welding head (29) and the workpiece (14, 31) later during the welding process, corresponds to that distance, at which the welding wire (9, 30) fed out to the predeterminable length (1) touches the workpiece (31) .

7. The method according to any one of the preceding claims, **characterized in that** after the wire-touch sensing process has started, the welding wire (9, 30) is fed out until a current flow is detected.

8. The method for teaching/testing a motion sequence of a welding robot (26) according to claim 7, comprising the following steps:
a) applying the test voltage between the welding wire (9, 30) and the workpiece (14, 31) by activating the wire-touch sensing process,
b) moving the welding head (29) at the workpiece (14, 31) along the mentioned motion sequence,
c) feeding the movably mounted welding wire (9, 30) out of the welding head (29) until a current flow is detected in the electric circuit in which the welding wire (9, 30) and the workpiece (14, 31) are positioned, and
d) retracting the welding wire (9, 30) by a predeterminable retraction distance and repeating steps a) to d).

9. The method according to any one of claims 1 to 8, wherein the length (1) by which the welding wire (9, 30) is fed out of and/or back into the welding head (29) is measured, in particular manually measured, or set via an input and/or output device or is defined by touching the workpiece (14, 31).

10. The method according to any one of claims 1 to 9, wherein the test voltage or the current flow resulting therefrom is provided to be lower than a voltage required for forming an arc (37) / a current required for forming an arc (37).

11. The method according to any one of claims 1 to 10, wherein the test voltage or the current flow resulting therefrom is provided to be lower than a voltage required for melting the welding wire (9, 30) / a current required for melting the welding wire (9, 30).

12. The method according to claim 11, wherein the test voltage and/or the current flow resulting therefrom are provided to be higher than a voltage required for forming an electric arc (37) / a current required for forming an electric arc (37), but lower than a voltage required for melting the welding wire (9, 30) / a current required for melting the welding wire (9, 30).

13. The method according to any one of claims 1 to 12, wherein
- the welding head (29) head in the region of a finished welding seam or a welding seam to be produced is moved transverse to the course of the seam,
- the position of the welding head (29) and optionally that of the welding wire (9, 30) is stored or determined whenever a current flow or a drop of the test voltage is detected in said electric circuit, and
- the width (b) / height of the welding seam and/or the position of the welding head (29) or the welding wire (9, 30) relative to the welding seam is calculated from a plurality of stored or determined positions.

14. The method according to any one of claims 1 to 13, wherein during the evaluation of the welding wire feeding process, the longest stickout (1), to which the central position of the welding seam corresponds, is determined.

15. The method according to any one of claims 1 to 14, wherein an alarm is triggered whenever a current flow or a drop of voltage is not detected, although this can be expected on the basis of the position of the welding head (29) or the welding wire (9, 30) and the coordinates of the workpiece.

16. The method according to any one of claims 1 to 15, wherein
- a test voltage is applied between an electrically conductive part of the welding head (29) and the workpiece (14, 31) and
- the welding head (29) is stopped or retracted whenever a current flow or a drop of the test voltage is detected in an electric circuit in which said conductive part and the workpiece (14, 31) are positioned.

17. A control system for teaching a welding robot, in which a position is determined and stored by way of a manually implemented positioning process, comprising:
- a first output for actuating a first driving system, which is prepared for moving the welding head (29) to a position at the workpiece (14, 31), preferably when the power supply of the welding head (29) is deactivated,
- a second output for actuating a second drive system (32), which is prepared for feeding the movably mounted welding wire (9, 30) out of a welding head (29), in particular of the welding torch (7), to a length (1), wherein
- the control system comprises a detection device (35) for detecting a current flow in an electric circuit and means for starting a so-called wire-touch sensing process after the positioning at the position has been carried out, the wire-touch sensing process being set up for applying a test voltage between the welding wire (9, 30) and the workpiece (14, 31) and to subsequently continue the manual positioning process with the welding head and
**characterized in that**
- the control system is set up for outputting a command via the second output causing the retraction of the welding wire (9, 30) for interrupting the current flow, whenever a current flow between the welding wire (9, 30) and the workpiece (14, 31) or a drop in the test voltage is detected.

18. A welding plant, comprising a welding device (1) and a welding robot (26) that are coupled to each other by means of lines, in particular a bus-system, and a welding torch (7) attached to a welding robot (26), in particular to the last axis of the welding robot, the welding torch (7) being guided along a predetermined track by the welding robot (26) and the open-loop control / closed-loop control of the welding process carried out is executed by the welding device (1),
**characterized in that**
a control system according to claim 17 controls the plant such that before a welding process is carried out, a manually controlled teaching-process, with which a position is determined and stored by way of a manually implemented motion sequence, is performed, comprising the following steps:
- feeding the movably mounted welding wire (9, 30) out of a welding head (29) to a predeterminable length (1) and
- moving the welding head (29) to a position at a workpiece (14, 31) when the power supply of the welding head (29) is deactivated,
- starting a teaching-process in the welding device (1) after positioning at the position, in which process,
- a test voltage is applied between the welding wire (9, 30) and the workpiece (14, 31) and
- subsequently, the manual motion sequence is carried out with the welding head (29),
- wherein the welding wire (9, 30) is retracted for releasing the current flow when a current flow between the welding wire (9, 30) and the workpiece (14, 31) or a drop of the test voltage is detected, and
- after the release, the welding wire (9, 30) is moved to the workpiece (14, 31) or to the predeterminable length (1), and that
- the welding wire (9, 30) is repeatedly moved to the workpiece (14, 31) and back from the workpiece (14, 31) along the contour of the workpiece (14, 31), as long as the length (1) has not been reached.

19. The welding plant according to claim 18, **characterized in that** an automated determination of the central position of the weld bead is carried out, in which the welding robot (26) moves the welding torch (7) transverse with respect to the weld bead.

20. The welding plant according to claim 19, **characterized in that** when the welding torch (7) is moved transversely with respect to the weld bead, in particular transversely with respect to a fillet weld, the welding wire (9, 30) is permanently moved toward and back from the workpiece (14, 31), and subsequently, an evaluation of the welding wire feed is carried out.

21. A method for an automated positioning of a welding head (29) at a workpiece (14, 31), in which a preprogrammed position is approached, wherein:
- after the positioning, a so-called wire-touch sensing process is started in the welding device, in which
- a test voltage is applied between the welding wire (9, 30) and the workpiece (14, 31) and the welding wire (9, 30) is fed in the direction of the workpiece (14, 31) and the welding wire (9, 30) is retracted for interrupting the current flow whenever a current flow between welding wire (9, 30) and workpiece (14, 31) is detected, and that
- subsequently, a preprogrammed track is traced, which preferably runs transverse to the planned welding seam axis, and that
- when moving the welding head (29), the welding wire (9, 30) is repeatedly moved to the workpiece (14, 31) and back from the workpiece (14, 31), thus, the contour of the workpiece (14, 31) is sensed, and a defined position, in particular a central position, is calculated from the values of the wire lengths which have been fed.

22. The method according to claim 21, **characterized in that** a method according to one or more of claims 1 to 16 and a control system according to claim 17, as well as the welding plant according to one or more of claims 18 to 20 are used.

## Revendications

1. Procédé d'apprentissage d'un robot de soudure (26), dans lequel une position est déterminée par l'intermédiaire d'un processus de positionnement manuel et enregistré, comprenant les étapes suivantes :
- sortie d'un fil de soudure (9, 30) logé de manière mobile, hors d'une tête de soudure (29), plus particulièrement d'un chalumeau de soudure (7), sur une longueur (1) et
- déplacement de la tête de soudure (29) vers une position sur une pièce (14, 31), de préférence lorsque l'alimentation électrique de la tête de soudure (29) est désactivée, **caractérisé en ce que**
- après le positionnement, un processus « wire-touch » est démarré dans l'appareil de soudure, dans lequel
- entre le fil de soudure (9, 30) et la pièce (14, 31), est appliquée une tension de contrôle et
- le processus de positionnement manuel avec la tête de soudure (29) est ensuite continué,
- **caractérisé en ce que**
lors de la détection d'un courant entre le fil de soudure (9, 30) et la pièce (14, 31) ou lors d'une baisse de la tension de contrôle, le fil de soudure (9, 30) est retiré pour interrompre le courant.

2. Procédé selon la revendication 1, le fil de soudure (9, 30) étant déplacé après l'interruption à nouveau vers la pièce (14, 31) ou sur la longueur prédéterminée (1).

3. Procédé selon la revendication 1 ou 2, le fil de soudure (9, 30) étant déplacé, lors du déplacement de la tête de soudure (29), de manière répétitive vers la pièce (14, 31) et à nouveau à partir de la pièce (14, 31), donc le contour de la pièce (14, 31) est balayé tant que la longueur (1) n'est pas atteinte.

4. Procédé selon l'une des revendications précédentes, la vitesse de retour du fil de soudure (9, 30) est choisie de façon à ce qu'elle soit toujours supérieure à la vitesse du déplacement vers l'avant du chalumeau de soudure (7) contrôlé manuellement.

5. Procédé selon l'une des revendications précédentes, la source de courant (34) limitant la quantité d'énergie de façon à ce que, lors d'un court-circuit, le fil de soudure (9, 30) et la pièce (14, 31) ne fondent pas, mais de façon à ce que le contact des deux soit détecté le plus rapidement possible, cependant de façon à ce que les autres fonctions de surveillance, de commande et de régulation pour le processus de soudure proprement dit, comme la résolution du court-circuit, le convoyage du fil, l'alimentation en gaz protecteur, le circuit de refroidissement, etc. du fil de soudure (1) restent désactivées.

6. Procédé selon l'une des revendications précédentes, la distance entre la tête de soudure (29) et la pièce (14, 31) correspondant, plus tard lors de la soudure, à la distance lorsque le fil de soudure (9, 30) sorti de la longueur prédéterminée (1) entre en contact avec la pièce (31).

7. Procédé selon l'une des revendications précédentes, le fil de soudure (9, 30) étant sortie après le démarrage du processus de détection « wire-touch » tant qu'un courant est détecté.

8. Procédé selon la revendication 7, comprenant les étapes suivantes d'apprentissage/contrôle d'un déplacement du robot de soudure (26) :
a) application de la tension de contrôle entre le fil de soudure (9, 30) et la pièce (14, 31) par activation du processus de détection « wire-touch »,
b) déplacement de la tête de soudure (29) le long du déplacement mentionné sur la pièce (14,31),
c) sortie du fil de soudure (9, 30), logé de manière mobile, hors de la tête de soudure (29) jusqu'à ce que, dans le circuit électrique dans lequel se trouvent le fil de soudure (9, 30) et la pièce (14, 31), un courant soit détecté et
d) retour du fil de soudure (9, 30) d'un trajet de retour prédéterminé et répétition des étapes a) à d).

9. Procédé selon l'une des revendications 1 à 8, la longueur (1), de laquelle le fil de soudure (9, 30) est sortie et/ou retourné hors de la tête de soudure (29), étant mesurée, plus particulièrement manuellement ou réglée par l'intermédiaire d'un dispositif d'entrée et/ou de sortie ou définie par le contact avec la pièce (14, 31).

10. Procédé selon l'une des revendications 1 à 9, la tension de contrôle ou le courant qui en résulte étant inférieur à une tension nécessaire à la formation d'un arc électrique (37) / à un courant nécessaire à la formation d'un arc électrique (37).

11. Procédé selon l'une des revendications 1 à 10, la tension de contrôle ou le courant qui en résulte étant inférieur à une tension nécessaire à la fusion du fil de soudure (9, 30) / à un courant nécessaire à la fusion du fil de soudure (9, 30).

12. Procédé selon la revendication 11, la tension de contrôle ou le courant qui en résulte étant supérieur à une tension nécessaire à la formation d'un arc électrique (37) / à un courant nécessaire à la formation d'un arc électrique (37), mais inférieur à une tension nécessaire pour la fusion du fil de soudure (9, 30) / à un courant nécessaire pour la fusion du fil de soudure (9, 30).

13. Procédé selon l'une des revendications 1 à 12,
- la tête de soudure (29) étant déplacée au niveau d'un cordon de soudure fini ou à réaliser, transversalement par rapport à son extension,
- la position de la tête de soudure (29) et en option du fil de soudure (9, 30) est enregistrée ou déterminée lorsqu'un courant dans le circuit électrique mentionné ou une baisse de la tension de contrôle est détectée et
- à partir de plusieurs positions enregistrées ou déterminées, la largeur (b) / la hauteur du cordon de soudure et/ou la position de la tête de soudure (29) ou du fil de soudure (9, 30) par rapport au cordon de soudure est déterminée.

14. Procédé selon l'une des revendications 1 à 13, lors de l'analyse du convoyage du fil de soudure, le stickout (1) le plus long auquel correspond la position centrale du cordon de soudure, est déterminé.

15. Procédé selon l'une des revendications 1 à 14, une alarme étant déclenchée lorsqu'un courant ou une baisse de tension n'est pas détectée bien que cela serait à prévoir du fait de la position de la tête de soudure (29) ou du fil de soudure (9, 30) et des coordonnées de la pièce.

16. Procédé selon l'une des revendications 1 à 15 :
- entre une partie électro-conductrice de la tête de soudure (29) et la pièce (14, 31), une tension de contrôle est appliquée et
- la tête de soudure (29) est arrêtée ou retournée lorsque, dans un circuit électrique, dans lequel se trouvent la partie électro-conductrice mentionnée et la pièce (14, 31), un courant ou une baisse de la tension de contrôle est détectée.

17. Dispositif de commande pour l'apprentissage d'un robot de soudure, dans lequel, par l'intermédiaire d'un processus de positionnement manuel, une position est déterminée et enregistrée, comprenant :
- une première sortie pour la commande d'un premier système d'entraînement, qui est conçu pour le déplacement de la tête de soudure (29) vers une position sur une pièce (14, 31), de préférence lorsque l'alimentation électrique de la tête de soudure (29) est désactivée,
- une deuxième sortie pour la commande d'un deuxième système d'entraînement (32), qui est conçu pour la sortie d'un fil de soudure (9, 30), logé de manière mobile, hors d'une tête de soudure (29), plus particulièrement du chalumeau de soudure (7), sur une longueur (1),
- le dispositif de commande comprenant un dispositif de détection (35) pour la détection d'un courant dans un circuit électrique et des moyens pour le démarrage d'un processus de détection « wire-touch » après le positionnement sur la position, le processus de détection « wire-touch » étant conçu pour appliquer, entre le fil de soudure (9, 30) et la pièce (14, 31), une tension de contrôle puis de continuer le processus de positionnement manuel avec la tête de soudure et
**caractérisé en ce que**
- le dispositif de commande est conçu pour générer, lors de la détection d'un courant entre le fil de soudure (9, 30) et la pièce (14, 31) ou de la baisse de la tension de contrôle, une instruction par l'intermédiaire de la deuxième sortie, qui provoque le retour du fil de soudure (9, 30) pour l'interruption du courant.

18. Installation de soudure, comprenant un appareil de soudure (1) et un robot de soudure (26), qui sont couplés entre eux par l'intermédiaire de lignes, plus particulièrement un système de bus, et un chalumeau de soudure (7) fixé au robot de soudure (26), plus particulièrement sur le dernier axe du robot de soudure, le chalumeau de soudure (7) étant guidé par le robot de soudure (26) le long d'une trajectoire prédéterminée et la commande/régulation du processus ainsi effectué est réalisée à partir de l'appareil de soudure (1),
**caractérisé en ce que**
un dispositif de commande selon la revendication 17 commande l'installation de façon à ce que, avant la réalisation d'un processus de soudure, un processus d'apprentissage contrôlé manuellement, dans lequel, par l'intermédiaire d'un déplacement effectué manuellement, une position est déterminée et enregistrée, est effectué, qui comprend les étapes suivantes :
- sortie d'un fil de soudure (9, 30) logé de manière mobile, hors d'une tête de soudure (29) sur une longueur (1) prédéterminée et
- déplacement de la tête de soudure (29) vers une position sur une pièce (14, 31) lorsque l'alimentation électrique de la tête de soudure (29) est désactivée,
- démarrage d'un processus d'apprentissage dans l'appareil de soudure (1) après le positionnement à la position, dans lequel
- entre le fil de soudure (9, 30) et la pièce (14, 31), est appliquée une tension de contrôle et
- le déplacement manuel est ensuite effectué avec la tête de soudure (29),
- moyennant quoi, lors de la détection d'un courant entre le fil de soudure (9, 30) et la pièce (14, 31) ou lors de la baisse de la tension de contrôle, le fil de soudure (9, 30) est retourné pour la disparition du courant et
- après la disparition, le fil de soudure (9, 30) est déplacé vers la pièce (14, 31) ou sur la longueur prédéterminée (1) et **en ce que**
- le fil de soudure (9, 30) est déplacé de manière répétitive vers la pièce (14, 31) et à partir de la pièce (14, 31) le long du contour de la pièce (14, 31) tant que la longueur (1) n'est pas atteinte.

19. Installation de soudure selon la revendication 18,
**caractérisée en ce qu'**une détermination automatique de la position centrale d'un cordon de soudure est effectuée, dans laquelle le chalumeau de soudure (7) est déplacé par le robot de soudure (26) transversalement par rapport au cordon de soudure.

20. Installation de soudure selon la revendication 19,
**caractérisée en ce que** le fil de soudure (9, 30) est déplacée, lors du mouvement du chalumeau de soudure (7), transversalement par rapport au cordon de soudure, plus particulièrement par rapport à une soudure d'angle, en permanence vers et à partir de la pièce (14, 31) puis une analyse du convoyage du fil de soudure est effectuée.

21. Procédé pour le positionnement automatique d'une tête de soudure (29) sur une pièce (14, 31), dans lequel une position pré-programmée est approchée, moyennant quoi :
- après le positionnement, un processus de détection « wire-touch » est démarré dans l'appareil de soudure, dans lequel
- entre le fil de soudure (9, 30) et la pièce (14, 31), est appliquée une tension de contrôle et le fil de soudure (9, 30) est convoyé en direction de la pièce (14, 31) et, lors de la détection d'un courant entre le fil de soudure (9, 30) et la pièce (14, 31), le fil de soudure (9, 30) est retourné pour l'interruption du courant et en ce que
- une trajectoire pré-programmée est ensuite parcourue, qui s'étend de préférence transversalement par rapport à l'axe prévu du cordon de soudure et en ce que
- lors du déplacement de la tête de soudure (29), le fil de soudure (9, 30) est déplacé de manière répétitive vers la pièce (14, 31) et à partir de la pièce (14, 31), donc le contour de la pièce (14, 31) est balayé et, à partir des longueurs de fil convoyées, une position définie, plus particulièrement une position centrale, est déterminée.

22. Procédé selon la revendication 21, **caractérisé en ce qu'**un procédé selon l'une ou plusieurs des revendications 1 à 16 et un dispositif de commande selon la revendication 17 ainsi que l'installation de soudure selon l'un ou plusieurs des revendications 18 à 20 sont utilisés.
